Europäisches Patentamt

European Patent Office

Office européen des brevets

(19)

(11) **EP 1 415 497 B1**

(12) **EUROPÄISCHE PATENTSCHRIFT**

(45) Veröffentlichungstag und Bekanntmachung des Hinweises auf die Patenterteilung:
**08.06.2005 Patentblatt 2005/23**

(21) Anmeldenummer: 02754976.5

(22) Anmeldetag: **05.08.2002**

(51) Int Cl.$^7$: **H04Q 7/38**

(86) Internationale Anmeldenummer:
**PCT/EP2002/008735**

(87) Internationale Veröffentlichungsnummer:
**WO 2003/015440 (20.02.2003 Gazette 2003/08)**

(54) **VERFAHREN, TEILNEHMERGERÄT SOWIE FUNKKOMMUNIKATIONSSYSTEM ZUR ÜBERTRAGUNG VON GRUPPENNACHRICHTEN**

METHOD, SUBSCRIBER DEVICE AND RADIO COMMUNICATION SYSTEM FOR TRANSMITTING GROUP MESSAGES

PROCEDE, TERMINAL D'ABONNE ET SYSTEME DE COMMUNICATION RADIO PERMETTANT LA TRANSMISSION DE MESSAGES DE GROUPE

(84) Benannte Vertragsstaaten:
**DE FR GB**

(30) Priorität: **07.08.2001 EP 01119060**

(43) Veröffentlichungstag der Anmeldung:
**06.05.2004 Patentblatt 2004/19**

(73) Patentinhaber: **SIEMENS AKTIENGESELLSCHAFT
80333 München (DE)**

(72) Erfinder:
• **BECKMANN, Mark
  38124 Braunschweig (DE)**
• **ECKERT, Michael
  38122 Braunschweig (DE)**
• **HANS, Martin
  31139 Hildesheim (DE)**
• **OTTE, Andreas
  29227 Celle (DE)**

(56) Entgegenhaltungen:
WO-A-01/31968          US-A- 5 465 391
US-A- 5 923 649

## Beschreibung

Die Erfindung betrifft ein Verfahren zur Benachrichtigung mindestens einer Gruppe von einem oder mehreren Teilnehmergeräten eines Funkkommunikationssystems über das Vorliegen mindestens einer Gruppennachricht, die an diese Gruppe von mindestens einem Netzwerkelement des Funkkommunikationssystems über mindestens einen Funkkanal versendet werden soll, wobei das Vorliegen dieser Gruppennachricht dem Teilnehmergerät oder den Teilnehmergeräten der jeweiligen Gruppe mit Hilfe eines gemeinsamen, Gruppen-Paging-Indikatorsignals angezeigt und zur Auswertung bereitgestellt wird, wobei das gemeinsame Gruppen-Paging-Indikatorsignal über einen ersten separaten, physikalischen Funkkanal von mindestens einem Netzwerkelement an das Teilnehmergerät oder die Teilnehmergeräte der jeweiligen Gruppe übertragen wird.

Aus der US 5,923,649 ist ein Paging - Übertragungsverfahren bekannt, bei dem Mobilfunkgeräten einer Gruppe eine SPACH (short-message-service/Paging/ access channel") Nofizierungs-Nachricht anstelle der eigentlichen SPACH-Nachricht über die Luftschnittstelle einer Basisstation "gepaged" wird. Mit Hilfe dieser "paged notification message" wird das jeweilige Mobilfunkgerät abgefragt, ob es fähig ist, eine Nachricht zu empfangen. Wenn das Mobilfunkgerät antwortet, kann ein so genanntes BMI (base station, mobile switching center and interworking function) des Funknetzwerks ermitteln, in welcher Funkzelle sich das jeweilig antwortende Mobilfunkgerät aufhält und ihm mittels der dortigen Basisstation die eigentliche Nachricht zusenden.

Der Erfindung liegt als eine Aufgabe zugrunde, einen Weg aufzuzeigen, wie mindestens eine Gruppe von einem oder mehreren Teilnehmergeräten eines Funkkommunikationssystems über das Vorliegen mindestens einer Gruppennachricht möglichst effizient benachrichtigt werden kann. Diese Aufgabe wird durch ein Verfahren der eingangs genannten Art dadurch gelöst, dass über mindestens einen zweiten separaten Funkkanal mindestens ein Informationssignal mit Paging-Informationen zusätzlich darüber übertragen wird, welcher Art die zu übertragende Gruppennachricht ist, welcher Paging-Grund für diese Gruppennachricht vorliegt, und/oder an welche spezifische Empfängergruppe von Teilnehmergeräten die jeweilige Gruppennachricht adressiert ist, und daß der erste separate Funkkanal für das Gruppen-Paging-Indikatorsignal dem zweiten separaten Funkkanal mit Informationen über die jeweilige Gruppennachricht in eindeutiger Weise zugeordnet wird.

Dadurch ist es in effektiver Weise möglich, den ein oder mehreren Teilnehmergeräten einer vordefinierbaren Gruppe gemeinsam mit Hilfe des zusätzlichen Gruppen-Paging-Indikatorsignals anzukündigen, daß für diese Gruppe mindestens eine Gruppennachricht von mindestens einem Netzwerkelement des Funkkommunikationssystems zur Übertragung über mindestens einen Funkkanal ansteht. Aufgrund des Gruppen-Paging-Indikatorsignals kann das jeweilige Teilnehmergerät eine Vorauswahl dahingehend treffen, ob es mindestens einen weiteren Funkkanal mit weiteren Informationen über die vorliegende, zu übertragende Gruppennachricht zusätzlich abhört. Falls das jeweilige Teilnehmergerät von der anstehenden Gruppennachricht nicht betroffen ist, ist es somit für dieses nicht erforderlich, tatsächlich eine Signalisierungsverbindung über mindestens einen Funkkanal zu mindestens einem Netzwerkelement des Funkkommunikationssystems aufzubauen. Dadurch ist ein funkressourcen- und energiesparender Betrieb des jeweiligen Teilnehmergeräts ermöglicht. Denn nur falls das jeweilige Teilnehmergerät zur jeweilig angesprochenen Gruppe gehört, hört es auf mindestens einen weiteren Funkkanal, um weitere Informationen über die anstehende, zu übertragende Gruppennachricht abzuhören.

Die Erfindung betrifft weiterhin ein Teilnehmergerät eines Funkkommunikationssystems, das derart ausgebildet ist, dass es nach dem erfindungsgemäßen Verfahren betreibbar ist.

Außerdem betrifft die Erfindung auch ein Funkkommunikationssystem zur Durchführung des erfindungsgemäßen Verfahrens.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:

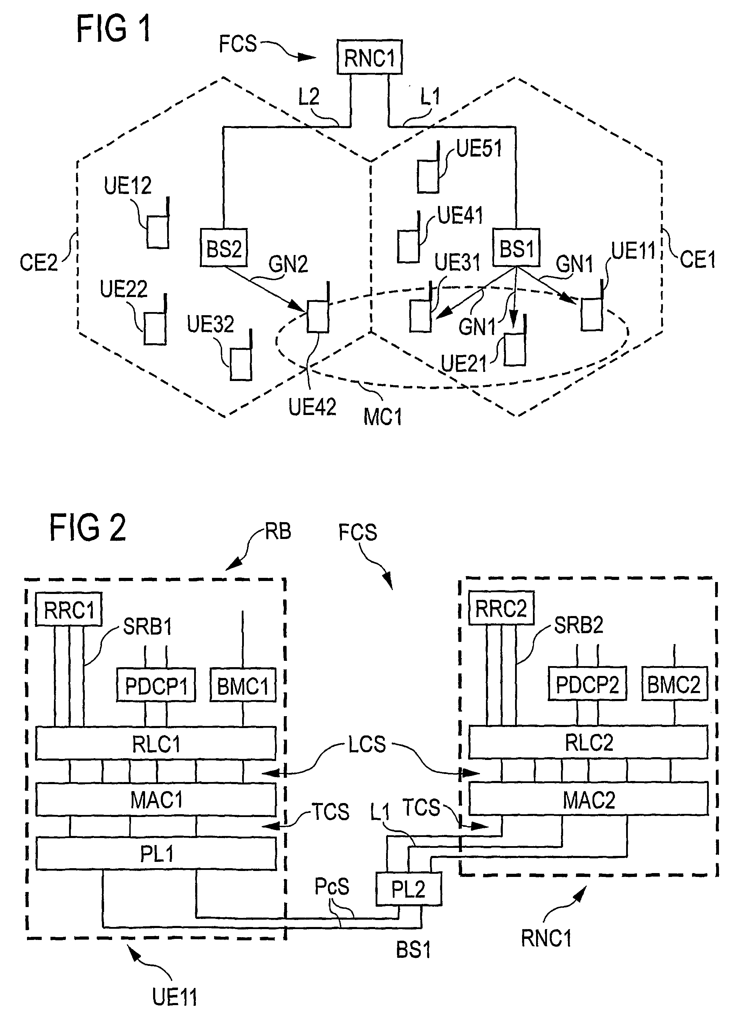

Figur 1  in schematischer Darstellung Komponenten eines Funkkommunikationssystems zur erfindungsgemäßen Benachrichtigung mindestens einer Gruppe von einem oder mehreren Teilnehmergeräten,

Figur 2  in schematischer Darstellung ein Schichtenmodell der Protokolle auf der Luftschnittstelle zwischen einem Teilnehmergerät und der zuständigen Basisstation in der Funkzelle dieses Teilnehmergeräts bei dem Funkkommunikationssystem nach Figur 1, insbesondere nach dem UMTS-Standard,

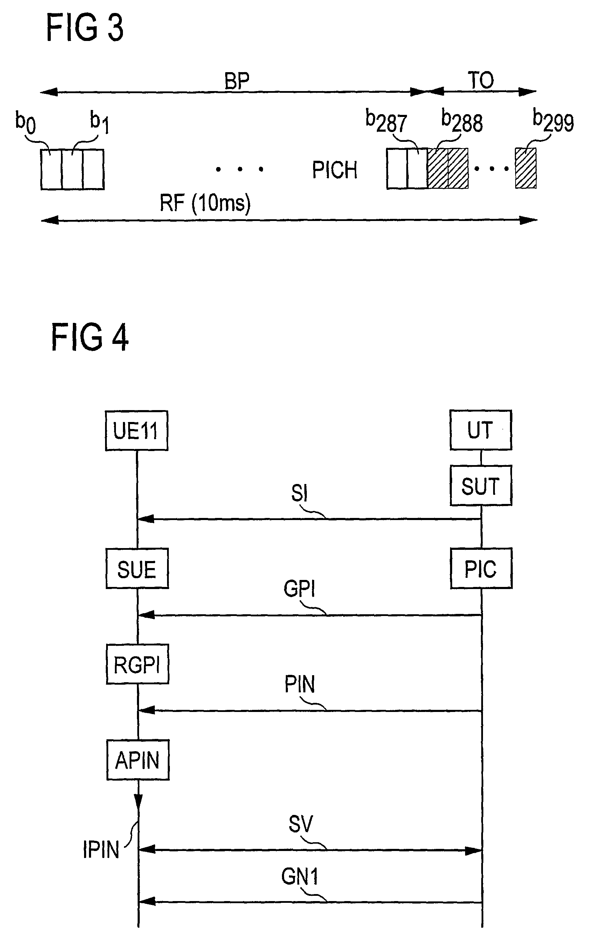

Figur 3  in schematischer Darstellung die Struktur bzw. den Aufbau der Rahmenstruktur des separaten, physikalischen Funkkanals zur Übertragung eines Gruppen-Paging-Indikatorsignals für das erfindungsgemäße Benachrichtigungsverfahren im Funkkommunikationssystem nach Figur 1,

Figur 4  in schematischer Darstellung einen vorteilhaften Signalisierungsablauf zur Benachrichtigung einer Gruppe von Teilnehmergeräten des Funkkommunikationssystems nach Figur 1 ausgehend von mindestens einer Netzwerkkomponente, insbesondere Basisstation, über das netzwerkseitige Vorliegen mindestens einer zu übertragenden Gruppennachricht,

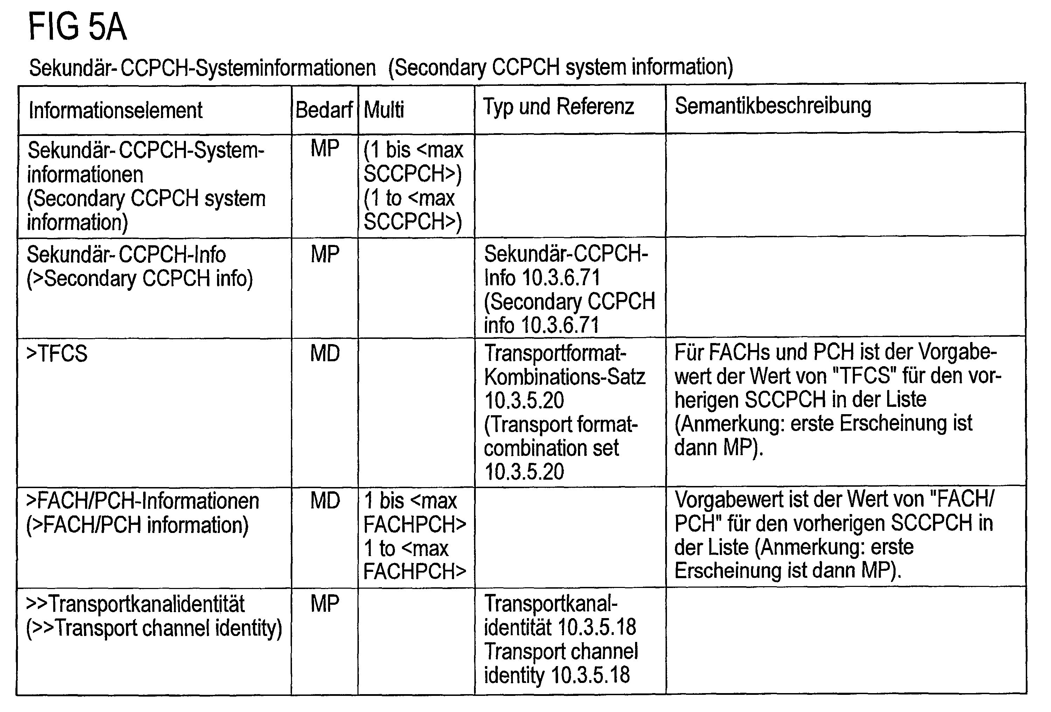

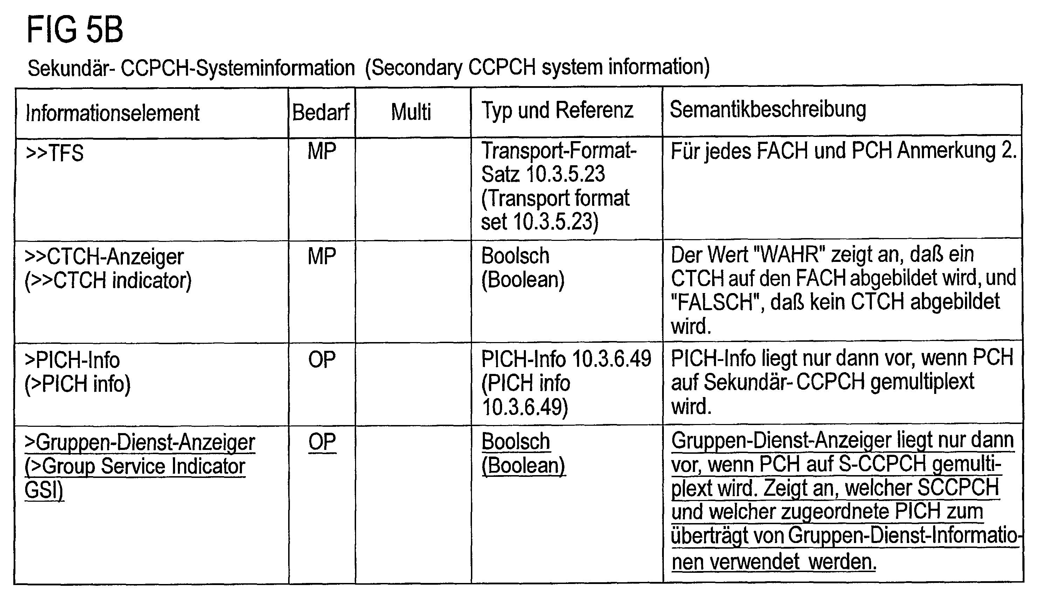

Figuren 5A, 5B — in schematischer Darstellung Informationselemente der Systeminformation, die zwischen mindestens einer Basisstation des Funkkommunikationssystems nach Figur 1 und mindestens einem Teilnehmergerät in dessen Funkzelle übertragen wird, wobei diese Systeminformation um ein zusätzliches Informationselement erweitert wird, mit dem markiert wird, ob auf dem sogenannten Secondary Common Control Physical Channel in UMTS ein Paging-Kanal mit Informationen über die Gruppennachricht gemultiplext wird (da die Figuren 5A und 5B eine sich ergänzende Tabelle zeigen, die zur übersichtlicheren Darstellung auf zwei separate Figuren aufgeteilt worden ist, wird im Folgenden diesbezüglich lediglich auf Figur 5 Bezug genommen),

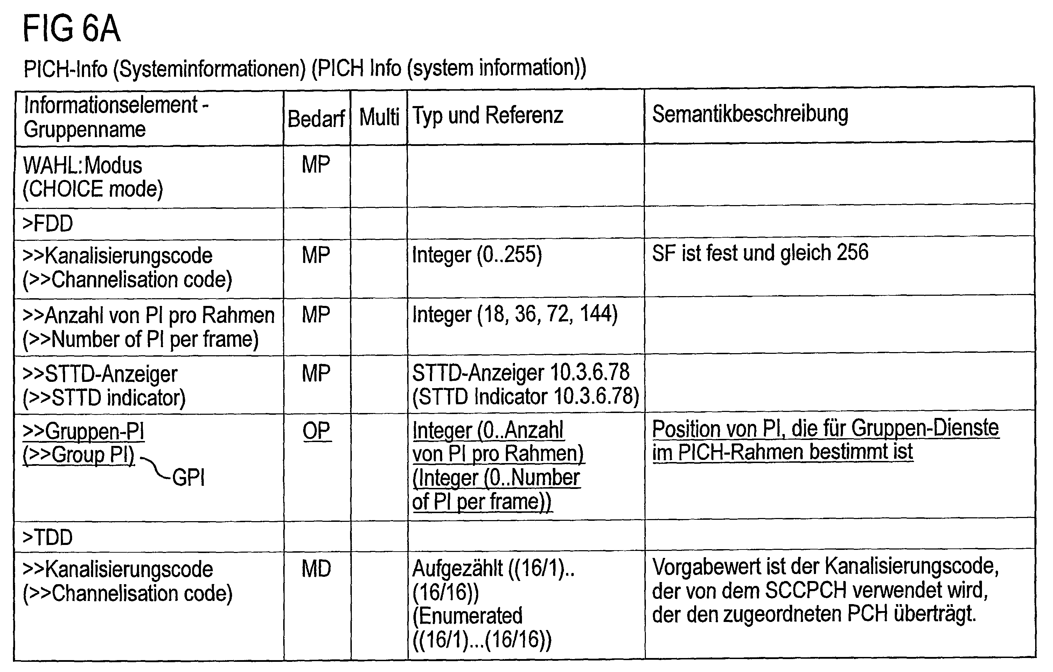

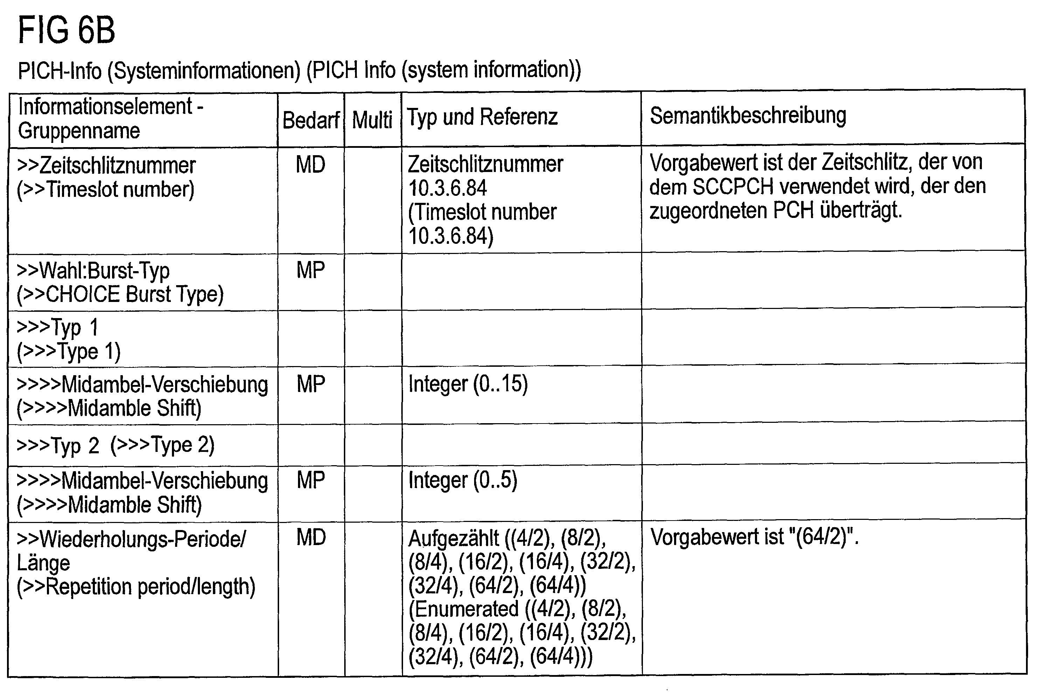

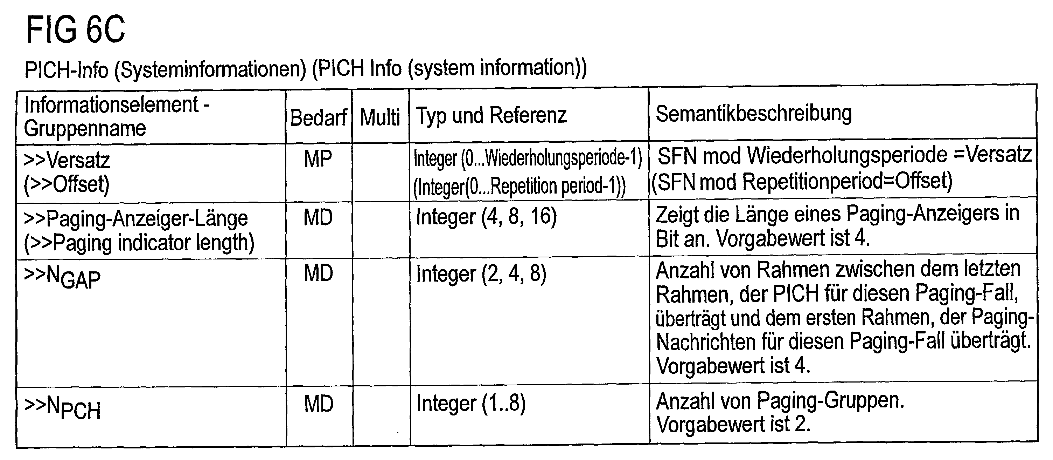

Figuren 6A-6C — in schematischer Darstellung das Informationselement "PICH-Info" als weiterer Teil der Systeminformation nach Figur 5, wobei durch ein zusätzliches Informationselement die Position eines etwaigen Gruppen-Paging-Indikatorsignals in der Rahmenstruktur dessen Funkkanals nach Figur 3 für jedes Teilnehmergerät in jeder von der anstehenden Gruppennachricht betroffenen Funkzelle des Funkkommunikationssystems zusätzlich übermittelt wird (da die Figuren 6A, 6B und 6C eine sich ergänzende Tabelle zeigen, die zur übersichtlicheren Darstellung auf drei separate Figuren aufgeteilt worden ist, wird im Folgenden diesbezüglich lediglich auf Figur 6 Bezug genommen),

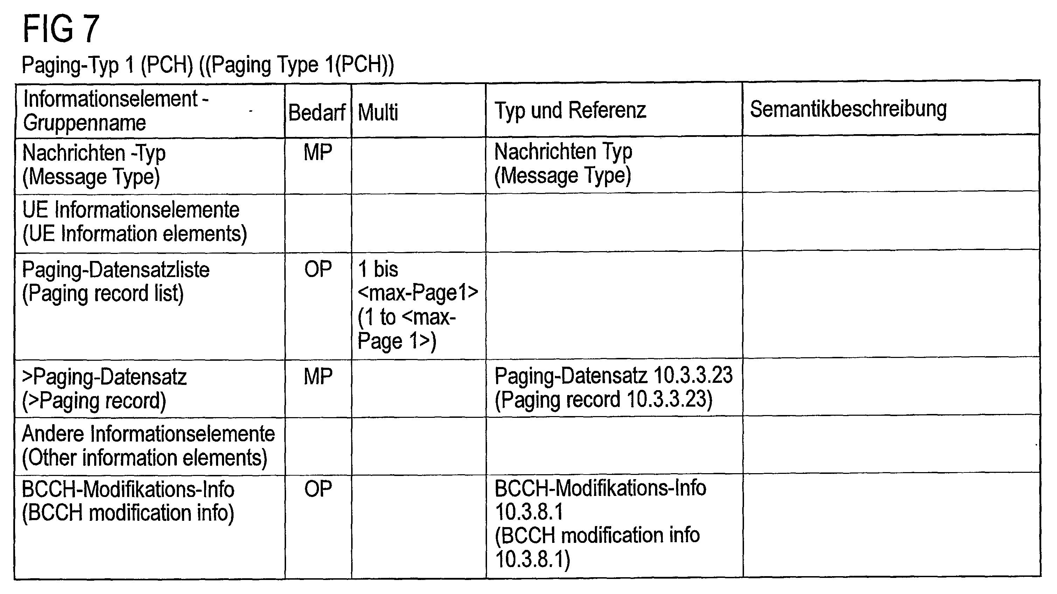

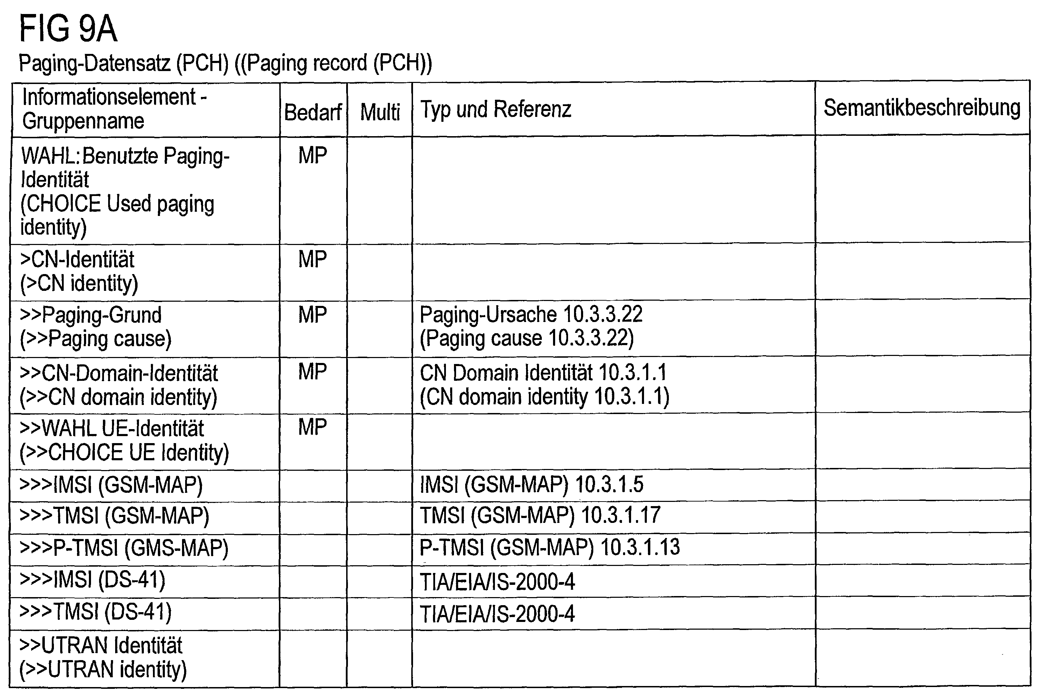

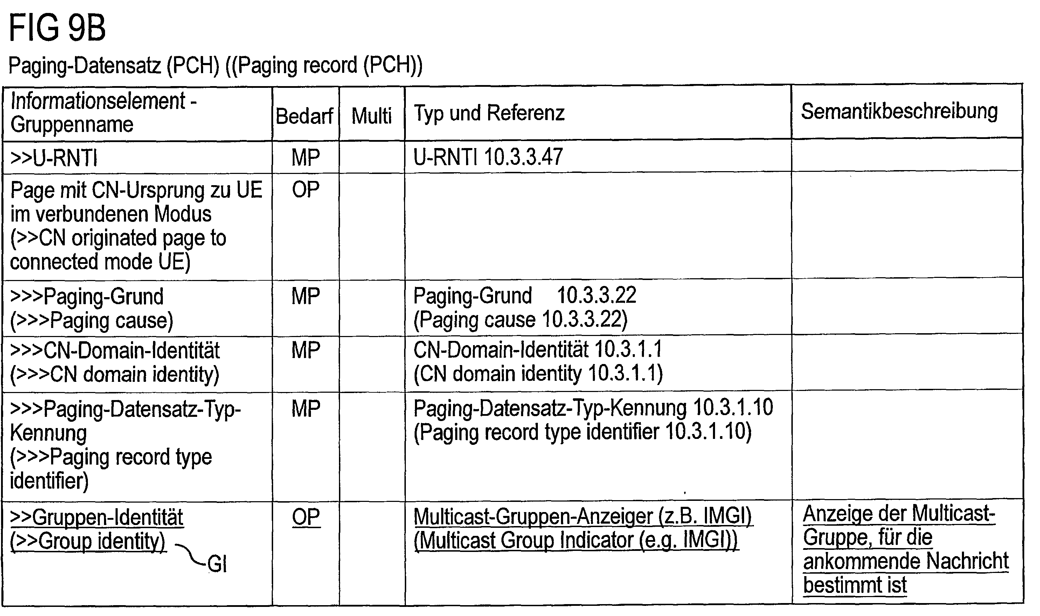

Figuren 7, 8, 9 — zusätzliche Informationselemente nach einer ersten Variante des erfindungsgemäßen Verfahrens über die Art und den Grund der vorliegenden, zu übertragenden Gruppennachricht, die auf einem separaten Funkkanal, insbesondere einem Paging Kanal, übertragen werden (da die Figuren 9A und 9B eine sich ergänzende Tabelle zeigen, die zur übersichtlicheren Darstellung auf zwei separate Figuren aufgeteilt worden ist, wird im Folgenden diesbezüglich lediglich auf Figur 9 Bezug genommen), und

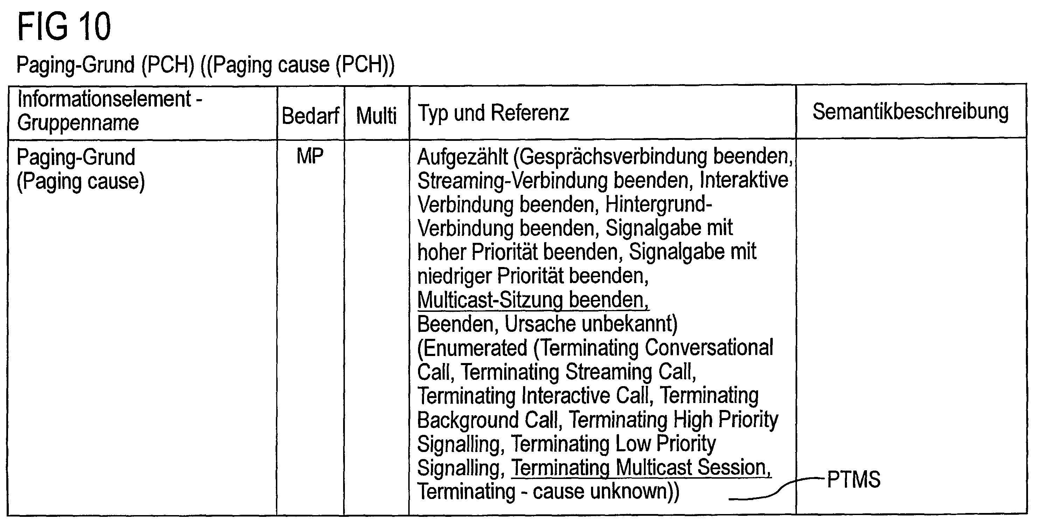

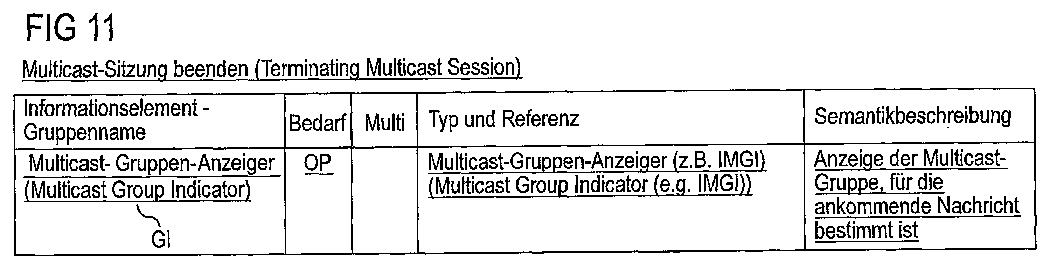

Figur 10, 11 — modifizierte Informationselemente des sogenannten Paging Kanals bzw. -Channels in UMTS, die weitere Angaben über die Art, den Grund und/oder die spezifische Gruppe enthalten, für die die anstehende Gruppennachricht bestimmt ist.

Elemente mit gleicher Funktion und Wirkungsweise sind in den Figuren 1 mit 11 jeweils mit denselben Bezugszeichen versehen.

Figur 1 zeigt in schematischer Darstellung beispielhaft zwei Funkzellen CE1, CE2 eines Funkkommunikationssystems FCS, das insbesondere nach dem UMTS (Universal Mobile Telecommunication System)-Standard betrieben wird. Die Funkzelle CE1 wird dabei von der Basisstation BS1 funktechnisch aufgespannt, während die zweite Funkzelle CE2 von der Basisstation BS2 aus versorgt wird. Die beiden Basisstationen BS1, BS2 stehen dabei stellvertretend für eine Vielzahl von weiteren, in der Figur 1 nicht dargestellten Basisstationen des Funkkommunikationssystems FCS, die entsprechende Funkzellen aufweisen und abdecken. Die jeweilige Basisstation ist vorzugsweise durch mindestens einen Funksender und mindestens einen Funkempfänger gebildet. Sie weist vorzugsweise mindestens eine Sendeantenne auf. Zusätzlich oder unabhängig zu ihrer Funktion, eine Funkverbindung zu Teilnehmergeräten des Funkkommunikationssystems FCS bereitzustellen, kann die jeweilige Basisstation jeweils für die Daten-/Nachrichtenübermittlung zu einem etwaig vorhandenen Nachrichten-/Datenfestnetz sorgen.

Im Funkkommunikationssystem FCS werden Nachrichten-/Datensignale über mindestens eine vordefinierte Luftschnittstelle zwischen mindestens einem Teilnehmergerät, insbesondere Mobilfunkgerät wie z.B. Handy, und mindestens einer Basisstation vorzugsweise nach einem Zeitmultiplex-Vielfachzugriffs-Übertragungsverfahren übertragen. Es ist vorzugsweise als Mobilfunksystem nach dem UMTS-Standard (= Universal Mobile Telecommunication System) ausgebildet. Insbesondere wird es im sogenannten FDD-Mode (Frequency Division Duplex) betrieben. Im FDD-Mode wird eine getrennte Signalübertragung in Up- und Down-Link-Richtung (Up-Link = Signalübertragung vom Mobilfunkgerät zur jeweiligen Basisstation; Down-Link = Signalübertragung von der jeweilig zugeordneten Basisstation zum Mobilfunkgerät) durch eine entsprechende separate Zuweisung von Frequenzen oder Frequenzbereichen erreicht. Mehrere Teilnehmer in derselben Funkzelle werden vorzugsweise über orthogonale Codes, insbesondere nach dem sogenannten CDMA-Verfahren (= Code Division Multiple Access) getrennt.

Als Teilnehmergeräte sind vorzugsweise Mobilfunktelefone, insbesondere Handys vorgesehen. Daneben können als Teilnehmergeräte auch sonstige Nachrichten- und/oder Datenübertragungsgeräte wie z.B. internetfähige Endgeräte, Computer, Fernsehgeräte, Notebooks, Faxgerät, usw. mit zugeordneter Funkeinheit zum Kommunikationsverkehr "On-air", d.h. über mindestens eine Luftschnittstelle, Komponenten des Funkkommunikationsnetzes sein.

Die Teilnehmergeräte halten sich dabei insbesondere mobil bzw. portabel, d.h. an wechselnden Orten im Funknetz auf, können dort aber auch gegebenenfalls ortsfest angeordnet sein.

In der Figur 1 werden die beiden Basisstationen BS1, BS2 über zugehörige Datenleitungen L1, L2 von einer übergeordneten Funknetzwerk-Kontrolleinheit RNC1 aus gesteuert bzw. kontrolliert. Diese überwacht die Zuordnung von Funkressourcen in den Funkzellen CE1, CE2 der Basisstationen BS1, BS2. Im vorliegenden Ausführungsbeispiel halten sich in der Funkzelle CE1 der Basisstation BS1 eine Vielzahl von Teilnehmergeräten UE11 mit UE51 auf. Ebenso sind momentan in der zweiten Funkzelle CE2 der Basisstation BS2 mehrere Teilnehmergeräte UE12 mit UE42 vorhanden. Die Teilnehmergeräte UE11, UE21, UE31 in der ersten Funkzelle CE1 sowie das Teilnehmergerät UE42 in der zweiten Funkzelle CE2 sind vorab einer vordefinierbaren Gruppe MC1 zugeordnet, für die der Empfang von einer oder mehreren Gruppennachrichten in möglichst effizienter Weise bereitgestellt werden soll.

Unter dem Begriff "Gruppe von Teilnehmergeräten" wird im Rahmen der Erfindung vorzugsweise eine Klassifizierung nach technischem Service verstanden, d.h. z.B. insbesondere eine Einteilung nach solchen Teilnehmergeräten, die eine Multicast-Übertragung oder eine Broadcast-Übertragung erlauben. Weiterhin können die Teilnehmergeräte in den Funkzellen des Funkkommunikationsnetzes auch nach einer Vielzahl anderer Kriterien, insbesondere z.B. Art der Gruppennachricht wie z.B. Sportnachrichten, Wettervorhersagen, usw., oder Entstehungsgrund, usw. einsortiert bzw. eingeteilt werden.

Bei vielen in modernen Mobilfunksystemen angebotenen Diensten und Anwendungen ist es insbesondere wünschenswert, Nachrichten nicht nur zu einem, sondern zu zwei und mehreren Mobilfunkteilnehmern zu übertragen. Beispiele für solche Dienste und Anwendungen sind News-Groups, Video-Konferenzen, Video-On-Demand, verteilte Anwendungen, usw.

Eine Möglichkeit, dieselbe Nachricht zu verschiedenen Teilnehmern zu übertragen, wäre, jedem Empfänger-Teilnehmergerät separat eine Kopie der Daten bzw. Nachrichten zuzusenden. Diese Technik wäre zwar einfach zu implementieren, für große Gruppen von Teilnehmergeräten jedoch zu aufwendig. Da dieselbe Nachricht über N (N = Anzahl der Empfänger-Teilnehmergeräte der Nachricht) Einzelverbindungen (= Unicast-Verbindungen) zu übertragen wäre, und dabei mehrfach über gemeinsame Verbindungswege gesendet werden würde, würde diese Vorgehensweise eine zu hohe Bandbreite benötigen.

Demgegenüber bildet die sogenannte Multicast-Übertragung eine bessere Alternative. Hierbei werden die verschiedenen Teilnehmergeräte, denen dieselbe Nachricht übermittelt werden soll, zu einer Gruppe (Multicast-Gruppe) zusammengefaßt und dieser eine einzige, gemeinsame Adresse (Multicast-Adresse) zugeordnet. Die zu übertragenden Daten werden daraufhin nur einmal an diese Multicast-Adresse gesendet. Über gemeinsame Verbindungswege vom jeweiligen Sender zu den Empfängern, hier insbesondere Mobilfunkgeräten, wird die jeweilig zu übertragende Multicast-Nachricht im Idealfall nur einmal gesendet. Es ist dabei nicht erforderlich, daß der Sender weiß, wo und wie viele Empfänger-Teilnehmergeräte sich hinter der spezifischen Multicast-Adresse verbergen. Welches Teilnehmergerät insbesondere zu einer bestimmten, spezifischen Multicast-Gruppe gehört, läßt sich in vorteilhafter Weise netzwerkseitig definieren und verwalten. Auch kann sich das jeweilige Teilnehmergerät bei entsprechender Befugnis selbsttätig zu einer bestimmten Multicast-Gruppe anmelden und/oder wieder abmelden.

Beim sogenannten Broadcast werden als weitere Alternative Nachrichten an alle Teilnehmer innerhalb eines geographischen Gebietes gesendet. Ein solches Gebiet kann beispielsweise durch einen Teil des Gesamtfunknetzes bestimmt sein. Wie beim Multicast wird die Broadcast-Nachricht dabei über gemeinsame Verbindungswege vom Sender zu den einzelnen Empfängern im Idealfall nur einmal gesendet. Jedes Teilnehmergerät ist vorzugsweise in eine entsprechende Broadcast-Group eingetragen, sofern es Broadcast-Pakete dieser Gruppe empfangen will. Es kann somit selbständig bestimmen, ob es alle Broadcast-Nachrichten der jeweiligen Gruppe empfangen oder verwerfen möchte, oder ob es nur bestimmte Nachrichten empfangen möchte.

Um den Stromverbrauch von Mobilfunkgeräten zu reduzieren, fallen diese, wenn beispielsweise keine Verbindung aufgebaut wird bzw. nicht mehr existiert, oder keine eingehenden Anrufe oder Daten vorliegen, in eine Art "Ruhezustand". Im UMTS wird dieser Zustand als sogenannter Idle-Modus bezeichnet. Das jeweilige Mobilfunkgerät hört dabei nur noch auf bestimmte Kanäle. Seine Position ist nur noch "relativ ungenau" netzwerkseitig bekannt. Das heißt, es ist dem Netzwerk nicht bekannt, in welcher Funkzelle sich das jeweilige Mobilfunkgerät gerade befindet. Kommt es nun bei einem solchen, sich im Idle-Modus befindenden Mobilfunkgerät z.B. zu einem eingehenden Ruf, oder zur Übertragung von Daten, so wird es über bestimmte Funkkanäle, auf die es im Idle-Modus hört, über bestimmte Prozeduren darüber benachrichtigt. Das Mobilfunkgerät baut daraufhin eine Signalisierungsverbindung zum Funknetzwerk auf, über die dann die Funkressourcen auf der Luftschnittstelle zwischen der aktuell zugeordneten Basisstation und diesem Mobilfunkgerät für die Übertragung der Nachrichten allokiert und konfiguriert werden.

Das Schichtenmodell der Protokolle auf der Luftschnittstelle in UMTS ist in Figur 2 beispielhaft für das Teilnehmergerät UE11 in der Funkzelle CE1 der Basisstation BS1 dargestellt. Die Mobilfunkstation UE11 weist eine physikalische Schicht (Physical Layer) PL1 auf, die sendeseitig für die Verarbeitung der Daten zur Übertragung über die Luftschnittstelle über physikalische Kanäle PCS verantwortlich ist, und empfangsseitig die empfangenen Daten so an die darüber liegende Medienzugangskontrollschicht MAC1 (MAC = Medium Access Control) weitergibt, daß sie von dieser Schicht weiterverarbeitet werden können. Netzwerkseitig befindet sich die physikalische Schicht PL2 in der Basisstation BS1, welche über eine Festnetzverbindung mit der Funknetzwerk-Kontrolleinheit RNC1 (Radio Network Controller) verbunden ist. Die Verbindungen zwischen der physikalischen Schicht und der MAC-Schicht werden Transportkanäle genannt und geben an, wie die Daten übertragen werden (z.B. auf allgemeinen Kanälen, die von jedem Mobilfunkgerät in der Funkzelle der Basisstation gehört werden, oder auf Kanälen, die lediglich einer bestimmten Mobilfunkstation spezifisch gewidmet sind). Die MAC-Schicht hat Aufgaben, wie z.B. die Identifizierung der Nutzer, für die ein zu übertragendes Datenpaket bestimmt ist, falls es auf allgemeinen Kanälen übertragen wird, sowie die Abbildung logischer Funkkanäle (LCS) auf die Transportkanäle (TCS). Dafür fügt die MAC-Schicht sendeseitig Kontrollinformationen wie z.B. die Identität der jeweiligen Mobilfunkstation zu den zu übertragenden Datenpaketen hinzu, die sie von einer weiteren, höheren Schicht RLC (= Radio Link Control) erhalten hat. In der Mobilfunkstation UE11 ist diese RLC-Schicht mit RLC1 bezeichnet. In der Basisstation BS1 hat diese RLC-Schicht das Bezugzeichen RLC2. Als logische Kanäle werden dabei die Verbindungen zwischen der jeweiligen MAC-Schicht wie z.B. MAC1 im Teilnehmergerät UE11 sowie MAC2 in der Funknetzwerk-Kontrolleinheit RNC1 und der jeweilig zugeordneten Funkverbindungskontrollschicht RLC1 bzw. RLC2 (Radio Link Control) bezeichnet. Zur Abbildung der logischen Funkkanäle auf die Transportkanäle fügt die jeweilige MAC-Schicht senderseitig Kontrollinformationen wie z.B. die Identität der jeweiligen Mobilfunkstation zu den zu übertragenden Datenpaketen hinzu, die sie von der jeweilig höheren RLC-Schicht erhalten hat. Empfangsseitig werden diese Kontrollinformationen ausgewertet und wieder von den Datenpaketen entfernt, bevor diese über die logischen Verbindungen an die RLC-Schicht weitergeleitet werden.

Die jeweilige RLC-Schicht RLC1 bzw. RLC2 ist jeweils verantwortlich für die Überwachung der Datenübertragung, d.h. für die Feststellung von fehlenden Datenpaketen und eventuell deren erneute Anforderung. In der RLC-Schicht können mehrere Einheiten definiert werden. Jede RLC-Einheit weist dabei mindestens eine Verbindung zwischen höheren Schichten und RLC-Schicht (z.B. Radio Bearer RB) auf. Auch die RLC-Schicht kann sendeseitig den Paketen, die sie von höheren Schichten bekommen hat, Kontrollinformationen hinzufügen. Diese Kontrollinformationen werden empfangsseitig genutzt, um z.B. zu beurteilen, ob Pakete fehlen. Sie werden von den Paketen entfernt, bevor diese wieder an die höheren Schichten weitergeleitet werden. Oberhalb der RLC-Schicht befindet sich die Funkressourcen-Kontrollschicht RRC (Radio Ressource Control). Im einzelnen ist diese hier beim Teilnehmergerät UE11 mit RRC1 sowie bei der zugeordneten Funknetzwerk-Kontrolleinheit RNC1 mit RRC2 bezeichnet. Die jeweilig RRC-Schicht ist für die Konfiguration der unter ihr liegenden Schichten und vor allem für den Verbindungsaufbau verantwortlich. Die Verbindungen zwischen der jeweiligen RLC-Schicht und der RRC-Schicht werden SRBs (Signalling Radio Bearers) genannt und sind für das Teilnehmergerät UE11 mit RRC1 sowie für die Funknetzwerk-Kontrolleinheit RNC1 mit SRB2 bezeichnet.

Außerdem befinden sich oberhalb der jeweiligen RLC-Schicht die sogenannten RBs (Radio Bearer), die für die eigentliche Datenübertragung verwendet werden und die Verbindung zwischen der RLC-Schicht und der darüber liegenden Anwendung darstellen. Werden Paketdaten übertragen, befindet sich oberhalb der jeweiligen RLC-Schicht noch die sogenannte Paketdaten-Konvergenzschicht (PDCP = Packet Data Convergence Protocol), wie z.B. hier PDCP1 für das Teilnehmergerät UE11 sowie PDCP2 für die Funknetzwerk-Kontrolleinheit RNC1, die z.B für die Komprimierung von IP-Paketen (Internet Protokoll) zuständig ist. Weiterhin befindet sich oberhalb der RLC-Schicht des Teilnehmergeräts UE11 sowie der Funknetzwerkkontrolleinheit RNC1 der Basistation BS1 jeweils noch die sogenannte Broadcast-Multicast-Kontrollschicht BMC1 bzw. BMC2 (BMC = Broadcast Multicast Controller), welche für den Empfang von etwaigen Cell-Broadcast-Nachrichten (CBS-Nachrichten) verwendet wird. In der jeweiligen BMC-Schicht können ähnlich wie für die RLC-Schicht mehrere BMC-Einheiten definiert sein.

Teilnehmergeräte (=UEs=user equipment) können sich in verschieden Zuständen befinden. Diese Zustände beschreiben u.a., ob das jeweilige Teilnhemergerät eine Signalisierungsverbindung zum Netzwerk aufgebaut hat, oder ob es sich im "Ruhe"-Modus befindet, auf welche Kanäle es hört, und wo es im Netzwerk bekannt ist:

- Im RRC Zustand CELL_DCH state sind der jeweiligen Mobilfunkstation dedizierte Ressourcen zugewiesen und die Mobilfunkstation ist auf Zellebene bekannt, d.h. dem Netzwerk ist bekannt, in welcher Zelle sich die Mobilfunkstation befindet.

- Im RRC Zustand CELL_FACH state sind der jeweiligen Mobilfunkstation allgemeine Ressourcen zugewiesen, die sie sich mit anderen Mobilfunkstationen teilt. In diesem Zustand ist die Mobilfunkstation ebenfalls auf Zellebene bekannt.

- Im RRC Zustand CELL_PCH state empfängt die Mobilfunkstation Broadcast Nachrichten vom Netzwerk und hört auf die Benachrichtigungskanäle PICH (Paging Indicator Channel) und PCH (Paging Channel), über die das Netzwerk der Mobilfunkstation mitteilen kann, daß z.B. Nachrichten für es vorliegen. Die Mobilfunkstation ist in diesem Zustand auf Zellebene bekannt.

- Der RRC Zustand URA_PCH state ist ähnlich dem CELL_PCH state mit dem Unterschied, daß die Funkzelle, in der sich die Mobilfunkstation befindet, dem Netzwerk nicht genau bekannt ist, sondern das Netzwerk lediglich Kenntnis hat, in welcher Gruppe von Zellen, sich die Mobilfunkstation aufhalten könnte.

- Im Idle Mode empfängt die Mobilfunkstation ebenfalls Broadcast Nachrichten vom Netzwerk und hört auf die Benachrichtigungskanäle. Im Gegensatz zu URA_PCH und Cell_PCH state, hat die Funkressourcen Kontrolleinheit RNC jedoch keine Kenntnis über die Mobilfunkstation selber und auch nicht darüber, ob sich die Mobilfunkstation in einer der von ihr kontrollierten Zellen befindet.

Teilnehmergeräte im Idle und Connected Modus (CELL_DCH und CELL_FACH state) können über einen bestimmten Mechanismus über verschiedene Ereignisse informiert werden. Dies kann beispielsweise ein eingehender Ruf oder der Beginn der Übertragung von Daten sein. Der Benachrichtigungsmechanismus des Pagings, d.h. das Ausrufen einer zur Versendung anstehenden Nachricht, erfolgt vorzugsweise in zwei Stufen. Im ersten Schritt teilt das Funknetzwerk der jeweiligen Mobilfunkstation durch einen Indikator auf dem sogenannten Paging Indicator Channel PICH, d.h. allgemein ausgedrückt auf einem eigens vorgesehenen, ersten separaten Funkkanal mit, daß Nachrichten auf dem Paging Channel PCH, d.h. einem weiteren, zweiten separaten Funkkanal für die Mobilfunkstation abholbereit vorliegen und anschließend versendet werden. Im zweiten Schritt liest die jeweilige Mobilfunkstation den PCH-Kanal zumindest teilweise aus, in dem die eigentliche Benachrichtigung, insbesondere der Grund für das Paging (Paging Type, Paging Record, Paging Cause) enthalten ist. Das jeweilige Teilnehmergerät erkennt aus diesen Informationen, ob es sich um eine Nachricht handelt, die spezifisch an es gerichtet ist, und um was für eine Nachricht es sich handelt. Nur wenn das Teilnehmergerät positiv feststellt, daß die zu übertragende Nachricht an dieses Teilnehmergerät tatsächlich adressiert ist, baut dieses eine Signalisierungsverbindung zum Funknetzwerk auf, über die dann die Funkressourcen für die Übertragung der Nachrichten allokiert, d.h. zugewiesen bzw. bereitgestellt, und konfiguriert werden.
Beim Mechanismus für das Paging werden vorzugsweise zwei Typen unterschieden, die sich dadurch unterscheiden, in welchem Zustand sich das jeweilig zu benachrichtigende Teilnehmergerät befindet:

- Paging Type 1: Diese Prozedur wird genutzt, um Paging Informationen an bestimmte UEs im Idle mode, CELL_PCH oder URA_PCH Stadium zu senden. Als logischer Kanal wird dafür der sogenannte Paging Control Channel (PCCH) genutzt. Höhere Schichten im Netzwerk können ein Paging veranlassen, um z.B. den Aufbau einer Signalisierungsverbindung zu veranlassen.
- Paging Type 2: Diese Prozedur wird genutzt, um dedizierte, d.h. spezifische Paging Informationen an ein bestimmtes Teilnehmergerät, abgekürzt UE, im connected mode im CELL_DCH oder CELL_FACH Stadium zu übertragen.

Im Rahmen des nachfolgenden Ausführungsbeispiels ist insbesondere der Paging Type 1 von Interesse, da hier der Fall betrachtet wird, daß eine Gruppe von Multicast-Teilnehmergeräten bzw. Mobilfunkgeräten ohne dedizierte Verbindung zum Netzwerk über einen Paging Indikator über das Eintreffen von Multicast-Nachrichten informiert werden soll. Ggf. kann in analoger Weise mit derselben Methode auch das jeweilige Teilnehmergerät im connected mode im CELL_DCH oder CELL_FACH state über das Eintreffen neuer Multicast-Nachrichten informiert werden. Der physikalische Funkkanal S-CCPCH (Secondary Common Control Physical Channel) in UMTS überträgt Informationen des Transportkanals PCH (paging channel) und/oder des FACH (Forward Access Channel). Der Paging Kanal PCH wird über den S-CCPCH übertragen, wenn ein Teilnehmergerät Paging -Informationen empfangen soll. In der System Information (Figuren 5 und/oder 6 : System Information Block 5 und/oder 6) werden gemeinsame Funkkanäle wie z.B. der S-CCPCH definiert, die für alle in einer Funkzelle momentan befindlichen Mobilfunkgeräte bereitgestellt werden. Jeder S-CCPCH, der einem Teilnehmergerät in der Systeminformation zugewiesen wird, kann vorzugsweise bis zu einen Paging Kanal PCH beinhalten. In einer Funkzelle können entweder ein oder mehrere PCHs bereitgestellt werden. Jedem PCH wird vorzugsweise genau ein Paging Indikator-Funkkanal PICH in definierter Weise zugeordnet. Für den Fall, daß mehr als ein Paging Kanal PCH (und zugehöriger, fest zugeordneter Paging Indikator-Funkkanal PICH) in der System Information definiert ist, führt das jeweilige Teilnehmergerät eine Selektion dahingehend aus, auf welchen Paging-Funkkanal es dann nachfolgend hört, d.h. empfangsbereit geschaltet ist. Dafür wählt das jeweilige Teilnehmergerät einen der aufgelisteten Funkkanäle S-CCPCH aus, vorzugsweise basierend auf der spezifischen International Mobile Subscriber Identity IMSI des jeweiligen Teilnehmergeräts:
"Index des gewählten S-CCPCH" = IMSI mod K,
wobei K gleich der Anzahl der in der Systeminformation aufgeführten S-CCPCHs ist, die einen Paging Kanal PCH übertragen. Mit anderen Worten heißt das, daß die Funkkanäle S-CCPCH, die nur einen FACH-Funkkanal (Forward Access Channel) transportieren, nicht mitgezählt werden. Die S-CCPCH werden vorzugsweise in der Reihenfolge indiziert, wie sie in der System Information erscheinen (0 bis K-1). Die Funkkanäle S-CCPCH, die einen Paging Kanal PCH transportieren, werden in der System Information als erste aufgeführt. "Index des gewählten S-CCPCH" identifiziert den gewählten S-CCPCH mit demjenigen PCH und demjenigen zugewiesenen PICH, der vom jeweiligen Teilnehmergerät wie z.B. UE11 genutzt werden soll.

Der Paging Indikatorkanal bzw.- Channel PICH ist ein physikalischer Kanal, der genutzt wird, um Paging-Indikatoren zu übertragen. Der PICH ist vorzugsweise immer in definierter Weise einem S-CCPCH zugeordnet, der einen PCH Transportkanal überträgt. Figur 3 zeigt den Aufbau der Rahmenstruktur RF des PICH für den UMTS-FDD Mode (Frequency Division Duplex). Ein PICH Rahmen dauert vorzugsweise 10 ms und ist insbesondere 300 bits (($b_0$, $b_1$, ..., $b_{299}$) lang. Von diesen werden die ersten 288 bits ($b_0$, $b_1$, ..., $b_{287}$) genutzt, um Paging Indikatoren zu übertragen. Die verbleibenden 12 bits sind daher formell gesehen nicht Teil des PICH und sollen nicht übertragen werden. Dieser Teil des PICH Rahmens ist reserviert für zukünftige Anwendungen. Während also ein erster Teilabschnitt BP der Rahmenstruktur RF des Transportkanals PICH zu Belegung mit Paging-Indikatoren vorreserviert ist, ist ein zweiter, hier endseitiger Teilabschnitt TO noch frei.

In jedem PICH Rahmen werden $Np$ ($Np$ = 18, 36, 72 oder 144) Paging Indikatoren übertragen. Welcher der Paging Indikatoren (Pq) welchem UE zugeordnet ist, wird dabei zweckmäßigerweise durch höhere Protokollschichten in der Sende-/Empfangseinheit des jeweiligen Teilnehmergeräts und/oder der jeweilig zugeordneten Basisstation bzw. deren zugewiesener Funknetzwerkkontrolleinheit berechnet. Der Index ‚q' gibt dabei die Position innerhalb des jeweiligen PICH Rahmens an und wird vorzugsweise berechnet als:

$$q = \left( PI + \left\lfloor \left( \left( 18 \times \left( SFN + \lfloor SFN/8 \rfloor + \lfloor SFN/64 \rfloor + \lfloor SFN/512 \rfloor \right) \right) \bmod 144 \right) \times \frac{Np}{144} \right\rfloor \right) \bmod Np$$

'PI' wird dabei von höheren Schichten für jedes UE insbesondere berechnet als:

$$PI = (IMSI \; div \; 8192) \; mod \; Np \qquad [3GPP \; TR \; 25.304]$$

SFN ist dabei die 'System Rahmen' Nummer (SFN= System Frame Number) des P-CCPCH (Primary CCPCH), während dem der PICH auftritt. Dadurch, daß q eine Funktion von $SFN$ ist, wechselt die Position des einem UE zugeordneten Paging Indikators ständig. Die IMSI (International Mobile Subscriber Identity) ist jedem Mobilfunkgerät zugeordnet und identifiziert diese eindeutig.

Wenn ein Paging Indikator in einem bestimmten PICH-Rahmen auf logisch "1" gesetzt ist, liest daraufhin das diesem Paging-Indikator zugeordnete Teilnehmergerät (=UE) den PCH des entsprechenden S-CCPCH.

Nachdem ein Teilnehmergerät mit Hilfe des Paging Indikators auf dem PICH über ein neues Ereignis informiert worden ist, wird es zweckmäßigerweise nun noch den konkreten Grund dafür in Erfahrung bringen. Dies ist insbesondere von Vorteil, da es bei der Berechnung, welcher Paging-Indikator innerhalb eines PICH Rahmens welchem UE zugeordnet ist, passieren kann, daß zwei oder mehr UEs auf denselben Paging-Indikator hören. Ob das Paging nun für das jeweilige Teilnehmergerät spezifisch bestimmt ist, und was der genaue Grund für das Paging ist, erfährt das jeweilige Teilnehmergerät, indem es verschiedene Informationselemente liest, die auf dem Paging Channel (PCH) übertragen werden, der wiederum auf den zuvor bestimmten S-CCPCH abgebildet ist:

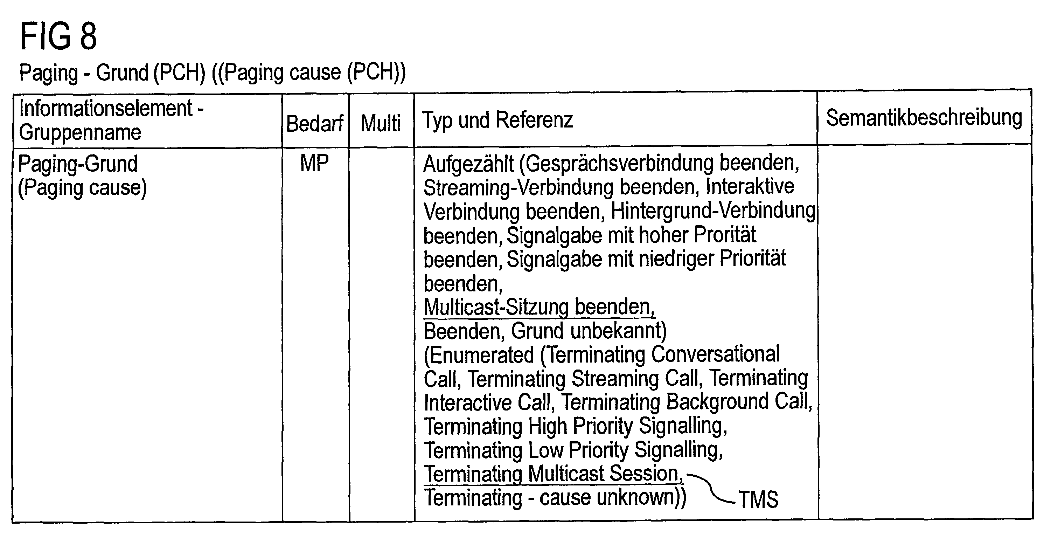

Als erstes liest das jeweilig betroffene Teilnehmergerät entsprechend Figur 7 das Informationselement ‚Paging Type 1' auf dem jeweilig zugewiesenen PCH. Es wird dadurch unter anderem darüber informiert, wie viele "Anlässe" für das Paging vorliegen. Es erhält zudem einen Verweis auf das Informationselement ‚Paging Record' entsprechend Figur 8. Durch dieses Informationselement erhält es unter anderem die Information, ob das durch das Paging bekannt gemachte Ereignis für es selbst oder für ein anderes Teilnehmergerät bestimmt ist. Desweiteren erhält es einen Verweis auf das Informationselement ‚Paging Cause' entsprechend Figur 9, in dem dann wiederum der genaue Grund für das Paging beschrieben ist. Dies kann u.a. ein eingehender Ruf oder der Beginn einer Datenübertragung sein. Die in den Figuren 7, 8 und 9 dargestellten Informationselemente mit den nicht unterstrichenen, d.h. gesondert markierten Mitgliedselementen sind insbesondere bereits entsprechend der 3GPP Spezifikation [3GPP TS 25.331] spezifiziert.

Wie bereits zuvor beschrieben, kennt das jeweilige Teilnehmergerät nun den Grund für die Benachrichtigung und baut eine Signalisierungsverbindung zum Netzwerk auf, über die dann entsprechende Ressourcen zur Übertragung der Nachricht bzw. Daten bereitgestellt werden.

Nach dem Stand der Technik werden Mobilfunkgeräte, die über das Eintreffen einer Nachricht bzw. eines eingehenden Rufes, den Beginn einer Übertragung von Daten oder ähnlichen Anlässen informiert werden sollen, bisher dediziert, das heißt Mobilfunkgeräte - spezifisch, via sogenanntem Paging benachrichtigt.

Bei verschiedenen Diensten und Anwendungen sollen oftmals Nachrichten nicht nur zu einem, sondern zu zwei und mehreren Mobilfunkteilnehmern übertragen werden. Dies ist allgemein beispielsweise beim Multicast, und speziell im UMTS insbesondere beim Multimedia Broadcast / Multicast Service (MBMS) der Fall. Im folgenden wird hierbei von einem "Gruppen Service" gesprochen, wobei ein 'Gruppen Service' mehrere Gruppen (z.B. Lotto, Börsenkurse, Wetter, ...) bzw. Klassen enthalten kann.

Nach dem Stand der Technik müßten die Teilnehmer solcher 'Gruppen Services' dediziert, das heißt über einzelne, den Mobilfunkgeräten zugewiesene Paging Indikatoren über ankommende Nachrichten informiert werden (=1 Paging Indikator pro Mobilfunkgerät). Befänden sich z.B. in einer Funkzelle 50 Mobilfunkgeräte, die alle zur selben Gruppe eines 'Gruppen Service' eingetragen sind, so würden diese mit Hilfe von 50 spezifischen Paging Indikatoren über das Eintreffen einer entsprechenden Nachricht informiert werden.

Demgegenüber ist Kern des erfindungsgemäßen Prinzips die Einführung eines Gruppen-Pagingindikators für 'Gruppen Services', bei denen eine Nachricht an eine Gruppe von Teilnehmern gesendet werden soll, insbesondere Multicast Services.

Vorteilhaft wird dieser Gruppen- Pagingindikator verwendet, um eine Gruppe von ein oder vorzugsweise mehreren Mobilfunkgeräten, die z.B. bestimmte Dienste oder Services empfangen möchten (,bei denen eine Nachricht an eine Gruppe von Teilnehmern gesendet werden soll (insbesondere Multicast Services)) über das Eintreffen von solchen Gruppen-Nachrichten o.ä. - Anlässen zu informieren.

Dieser 'Gruppen Paging Indikator' ist gegenüber dem Stand der Technik also nicht einem einzelnen Teilnehmergerät spezifisch zugeordnet, sondern einer Gruppe von ein oder mehreren Teilnehmergeräten. Diese Teilnehmergeräte bzw. UEs haben dabei zweckmäßigerweise gemeinsam, daß sie alle denselben 'Gruppen Service', insbesondere Multicast Service nutzen. Das bedeutet, daß sie mindestens einer Gruppe von Empfängern eines bestimmten 'Gruppen Services', insbesondere Multicast Service zugehören (= lediglich 1 Paging Indikator pro Service, insb. Multicast Service).

Folgende Verfahrensschritte sind zur Sicherstellung von gruppenweisem Paging zweckmäßig:

- In einem ersten Schritt ermittelt das jeweilige Mobilfunkgerät (UE), das zu einem 'Gruppen Service', insbesondere Multicast Service eingeschrieben ist, auf welchen der S-CCPCHs einer Funkzelle, die einen PCH transportieren, es zweckmäßigerweise hört.
- In einem zweiten Schritt wird ein Gruppen-Pagingindikator innerhalb eines PICH Rahmens bestimmt, der der jeweiligen Gruppe von Mobilfunkgeräten (UEs) zugeordnet ist, die einem 'Gruppen Service', insbesondere Multicast Service, zugehören.
- In einem dritten Schritt werden vorzugsweise bereits vorhandene Informationselemente, aus denen ein Mobilfunkgerät den Grund für das Paging erfährt, erweitert, damit ein Mobilfunkgerät daraus u.a. erkennt, für welche Multicast Gruppe eine Nachricht abgestellt ist. Diese Informationselemente können darüber hinaus evtl. auch noch weitere Informationen enthalten.

Aus der System Information erhält das jeweilige Teilnehmergerät Informationen über die S-CCPCHs, die in einer Funkzelle bereitgestellt werden, und ob diese einen PCH transportieren. Jedem S-CCPCH ist vorzugsweise fest ein PICH zugeordnet. Das Teilnehmergerät bestimmt bzw. berechnet daraufhin, auf welchen S-CCPCH / PCH und PICH es zweckmäßigerweise hört, und welcher Gruppen-Pagingindikator eines PICH Rahmens einem 'Gruppen Service', insbesondere Multicast Service zugeordnet ist.

Nach Erhalt eines 'Gruppen Paging Indikators', insbesondere Multicast Paging Indikators, der auf dem PICH übertragen wird, hört das Mobilfunkgerät zweckmäßigerweise daraufhin auf den zugeordneten PCH. Auf dem PCH werden dann Informationselemente übertragen, die in vorteilhafter Weise Informationen darüber enthalten, an welche Gruppe, insbesondere Multicast Gruppe, die eingetroffene Nachricht gerichtet ist (siehe Informationselemente Paging Type 1, Paging Record, Paging Cause in den Figuren 7, 8, 9). Gehört ein Mobilfunkgerät der entsprechenden Gruppe an, wird daraufhin eine Signalisierungsverbindung zum Mobilfunknetz aufgebaut, über die dann die Ressourcen zur Übertragung der Nachricht allokiert werden.

Vorteilhaft ist dabei, dass alle Mobilfunkgeräte durch einen gemeinsamen 'Gruppen Paging Indikator' über das Eintreffen einer Gruppen Nachricht, insbesondere Multicast Nachricht benachrichtigt werden. Nach dem Stand der Technik müssten dafür N (N = Anzahl der MC Teilnehmer in der Funkzelle) Paging Indikatoren verwendet werden, was zu aufwendig und zu wenig effektiv wäre.

Ein zweckmäßiger Ablauf des erfindungsgemäßen Verfahrens zur Benachrichtigung einer Gruppe von Empfängern über einen gemeinsamen 'Gruppen Paging Indikator' ist in der Figur 4 dargestellt:

Das jeweilige Teilnehmergerät (=UE, hier UE11) empfängt System- Informationen SI von mindestens einer Komponente, insbesondere Basisstation des Funknetzwerkes UT (in UMTS ist dies UTRAN= universal terrestrial radio access network) und liest daraus, welche S-CCPCHs in der Funkzelle übertragen werden, und welche dieser S-CCPCHs einen PCH übertragen. Jedem S-CCPCH, der einen PCH überträgt, ist fest ein PICH zugeordnet. Das Netzwerk bestimmt in einem Schritt SUT vorher, auf welchem S-CCPCH Gruppen- Informationen übertragen werden sollen. Das UE bestimmt in einem entsprechenden Schritt SUE, auf welchen der S-CCPCHs / PCHs und zugehörigen PICHs es zweckmäßigerweise hört. Mögliche Varianten für diese Bestimmung sind in einem nachfolgenden Abschnitt angegeben.

Steht nun die Übertragung einer Gruppennachricht GN1 für eine Gruppe des 'Gruppen Service' bevor, so sendet das Netzwerk (insbesondere UTRAN) UT in einem Schritt PIC ein entsprechendes Gruppen- Pagingindikatorsignal GPI auf dem vorher ausgewählten PICH. Alle UEs, die zu einer Gruppe des 'Gruppen Service' eingeschrieben sind, lesen im nächsten Schritt RGPI dieses Gruppen-Pagingindikatorsignal GPI und erkennen, daß nun eine Gruppennachricht GN1 übertragen werden soll. Welcher Gruppen-Pagingindikator innerhalb eines PICH Rahmens dem jeweiligen 'Gruppen Service' spezifisch zugeordnet ist, wird zuvor im Netzwerk und in den UEs bestimmt. Mögliche Varianten dafür sind in einem nachfolgenden Abschnitt angegeben.

Um in Erfahrung zu bringen, ob die jeweilig ankommende Gruppen-Nachricht das jeweilige Teilnehmergerät spezifisch betrifft, weil es Mitglied der entsprechenden Gruppe ist, liest dieses in einem weiteren Schritt APIN die Paging Informationen PIN (insbesondere die Informationselemente Paging Type 1, Paging Record und Paging Cause entsprechend der Figuren 7 mit 9), die auf dem PCH übertragen werden. Im Feld bzw. Informationselement Paging record steht unter anderem insbesondere eine Gruppenidentität GI (vgl. Figur 9), die eine bestimmte Gruppe des 'Gruppen Service' identifiziert. Weitere mögliche Varianten sind in nachfolgenden Abschnitten angegeben.

Erkennt das jeweilige Teilnehmergerät aufgrund der übertragenen Paging-Informationen PIN, daß die anstehende bzw. ankommenden Gruppennachricht GN1 für es nicht interessant ist, so fällt es wieder in den Zustand zurück, indem es sich zuvor befand. Erkennt das UE, dass die ankommende Gruppennachricht GN1 für es interessant ist, so baut es nun eine Signalisierungsverbindung SV auf, über die daraufhin die Ressourcen zur anschließenden Übertragung der Gruppennachricht allokiert und konfiguriert werden.

Für die Bestimmung, auf welchem S-CCPCH bzw. PCH und zugeordneten PICH ein Teilnehmergerät, das zu einem 'Gruppen Service' eingetragen ist, Signalisierungsdaten empfängt, gibt es verschiedene Möglichkeiten:

- In der wohl zweckmäßigsten Variante hören alle UEs, die zu einem 'Gruppen Service' eingetragen sind, auf den gleichen S-CCPCH. Die Information, auf welchen S-CCPCH die UEs zu hören haben, steht dabei in der System Information (SIB 5/6). Dafür wird die System Information zweckmäßigerweise um zusätzliche Informationselemente erweitert.

  Figur 5 zeigt dies am Beispiel des Informationselementes "Secondary CCPCH system information" [3GPP TS 25.331, Kapitel 10.3.6.72], das in SIB 5 und 6 übertragen wird. Hinzugefügt wird dort gegenüber dem Stand der Technik ein sogenannter "Group Service Indicator", der angibt, ob und welcher S-CCPCH, der einen PCH transportiert (und zugehöriger PICH), für die Übertragung von 'Gruppen Service' Informationen genutzt wird. Die Änderungen gegenüber dem Stand der Technik sind markiert.

- Eine weitere Möglichkeit ist, daß immer der gleiche, vordefinierte S-CCPCH für die Übertragung von Informationen, die eine Empfängergruppe betreffen, genutzt wird. Dies kann z.B. immer der erste oder der letzte der in der System Information definierten S-CCPCHs sein. Der zugeordnete PICH überträgt den Gruppen Pagingindikator. Der S-CCPCH überträgt den PCH, über den vorzugsweise Informationen über den Grund des Pagings übertragen werden.

- UEs, die zu einem 'Gruppen Service' eingetragen sind, hören alle auf den gleichen S-CCPCH. In den höheren Protokollschichten eines UEs wird berechnet, auf welchen S-CCPCH es zu hören hat. Für diese Berechnung wird in vorteilhafter Weise eine 'Gruppen Service' Identität genutzt, die den entsprechenden UEs zweckmäßigerweise bekannt ist oder bekannt gemacht wird.

  Bei Verwendung einer gruppenspezifischen (nicht 'Gruppen Service'-spezifischen) Identität wie beispielsweise der IMGI (International Mobile Group Identifier) wird bei der Berechnung des jeweilig zugeordneten S-CCPCHs zweckmäßigerweise sichergestellt, daß trotz unterschiedlicher Gruppen Identitäten desselben 'Gruppen Service' für alle UEs der gleiche S-CCPCH (und zugehöriger PICH) berechnet wird. Für den Fall, daß UEs unterschiedliche S-CCPCHs für die Übertragung von 'Gruppen Paging' Informationen berechnen, werden zweckmäßigerweise auf jedem dieser S-CCPCHs die entsprechenden Informationen übertragen. Der zugeordnete PICH überträgt den Gruppen Pagingindikator wie z.B. GPI1. Der S-CCPCH überträgt den PCH, über den Informationen über den Grund des Pagings übertragen werden.

- Auf allen in einer Funkzelle übertragenen S-CCPCHs, die PCHs übertragen, werden 'Gruppen Service' Informationen übertragen. Das heißt, auf allen zugeordneten PICHs werden die 'Gruppen Pagingindikatoren' übertragen. Auf allen PCHs werden somit vorteilhaft Informationen über den Grund des Pagings übertragen, was allerdings eine relativ hohe Redundanz bedingt.

Folgende Möglichkeiten zur Auswahl eines Gruppen- Pagingindikators innerhalb eines PICH Rahmens sind zweckmäßig, um den Teilnehmergeräten einer angesprochenen, betroffenen Gruppe über Ereignisse bezüglich eines 'Gruppen Service' oder einer sonstigen anstehenden Gruppennachricht signalisieren zu können (z.B. ankommende Nachricht usw.):

Nutzt man einen Gruppen-Pagingindikator für alle Gruppen des 'Gruppen Services', so wird ein UE dadurch beim Eintreffen einer Nachricht informiert, daß diese nun vorliegt. Zusätzlich sollen hier noch zwei weitere sekundäre Möglichkeiten betrachtet werden:

- Nutzt man einen Gruppenpagingindikator pro Gruppe eines 'Gruppen Service', so kann ein UE, das zu dem 'Gruppen Service' eingeschrieben ist, bereits an diesem Gruppenpagingindikator erkennen, ob es sich um eine Nachricht von Interesse handelt (Nachteil: Bei vielen Multicast (MC-) Gruppen werden viele Gruppenpagingindikatoren benötigt).
- Nutzt man einen Gruppenpagingindikator für bestimmte MC Gruppen (Untermenge aller MC Gruppen eines 'Gruppen Service'), so kann ein UE, das zu dem 'Gruppen Service' eingeschrieben ist, bereits am Gruppenpagingindikator vorselektieren, ob die eingehende Nachricht für es spezifisch, d.h. für sich interessant ist. Für welche Gruppe die Nachricht wirklich ist, erfährt das Teilnehmergerät dann erst aus dem Paging Cause.

Bei der Berechnung bzw. Festlegung, welche Paging Indikatoren innerhalb eines PICH Rahmens für welche 'Gruppen Services' genutzt werden, kann es zweckmäßig sein, dass anderen UEs, die auf den selben PICH hören, möglichst selten der selbe Gruppen-Pagingindikator zugewiesen wird. Dies gilt sowohl für UEs, die anderen 'Gruppen Services' zugehören, als auch für UEs, die zu keinem 'Gruppen Service' eingeschrieben sind. Dies hat den Vorteil einer Effizienzsteigerung des Verfahrens.

Erreicht werden kann dies zum Beispiel dadurch, daß

- Paging Informationen unterschiedlicher MC Services und Gruppen auf verschiedenen PICHs und PCHs gesendet werden.
- für PICHs, die 'Gruppen Paging Indikatoren' und PICHs, die keine 'Gruppen Paging Indikatoren' übertragen, unterschiedliche DRX Zyklen verwendet werden. PICHs werden von UEs nicht in jedem Rahmen empfangen, sondern in regelmäßigen Abständen, sog. DRX Zyklen (z.B. zur Energieersparnis).

Durch die Verwendung unterschiedlicher DRX Zyklen für PICHs mit und ohne 'Gruppen Paging Indikatoren' kann man "Doppelbelegungen" von Paging Indikatoren verhindern.

Kommt es aber doch zu dem Fall, daß zwei oder mehr UEs der selbe Paging Indikator zugeordnet wird, so ist es zweckmäßig, daß diese UEs den Grund für das Paging, und für wen das Ereignis tatsächlich interessant ist, aus entsprechenden Informationselementen lesen.

Die Berechung bzw. Festlegung, welcher Gruppenpagingindikator innerhalb eines PICH Rahmens welchem 'Gruppen Service' zugeordnet ist, wird vorzugsweise durch höhere Schichten ausgeführt.

Für die Berechnung der Positionen 'q' des jeweiligen Gruppen-Pagingindikators wie z.B. GPI1 kann beispielsweise eine Gruppen Identität (z.B. IMGI, International Mobile Group Identity) genutzt werden. Die Formel zur Berechnung von 'GPI1' könnte dann z.B. folgendermaßen aussehen:

$$GPI1 = (IMGI \ div \ 8192) \ mod \ Np$$

Eine andere Möglichkeit ist, daß immer der gleiche vordefinierte Gruppen-Pagingindikator für 'Gruppen Service' Zwecke verwendet wird. Beispielsweise kann dies immer der erste oder letzte Gruppen- Pagingindikator in einem PICH Rahmen oder irgend ein anderer sein. Welcher Gruppen-Pagingindikator innerhalb eines PICH Rahmens für 'Gruppen Services' reserviert ist, kann beispielsweise durch Erweiterung entsprechender Informationselemente bekannt gemacht werden.

In Figur 6 ist das Informationselement 'PICH Info' [3GPP TS 25.331, Kapitel 10.3.6.49] durch eine zusätzliche Information GPI mit dem Namen 'Group PI' erweitert. Dieses Informationselement gibt die Position eines Gruppen-Pagingindikators innerhalb eines PICH Rahmens an, der einem 'Gruppen Service' zugeordnet ist. Die Änderung ist für dieses Ausführungsbeispiel beispielhaft nur für FDD (Frequency Division Duplex) angewendet. Die Änderungen gegenüber dem Stand der Technik sind durch Unterstreichen der zusätzlichen Informationssignale markiert.

Weiterhin wäre es möglich, die noch nicht verwendeten Bits TO eines PICH Rahmens (siehe Figur 3) für 'Gruppen Service' Zwecke zu verwenden.

Durch die Erweiterung der für das Paging verantwortlichen Informationselemente, soll in vorteilhafter Weise zum einen der Grund für das Paging angezeigt werden, als auch die Gruppe des 'Gruppen Services', die das Paging betrifft. Dies soll im folgenden am Beispiel des Multicast Services gezeigt werden.

Eine Möglichkeit ist, das Informationselement 'Paging Record' [3GPP TS 25.331, Kapitel 10.3.3.23] von Figur 9 um ein zusätzliches Element GI ("Multicast Group Identy") zu erweitern, in dem dann die Multicast Gruppe des ,Multicast Service' identifiziert wird. Zusätzlich verweist der 'Paging Record' auf das Informationselement 'Paging Cause' [3GPP TS 25.331, Kapitel 10.3.3.22], dass zweckmäßigerweise um ein zusätzliches Element TMS ("Terminating Multicast Session") erweitert, das den Grund für das Paging angibt, nämlich eine beginnende Multicast Übertragung (siehe Figur 8). Die Änderungen gegenüber dem Stand der Technik sind jeweils durch unterstreichen des jeweiligen zusätzlichen Informationssignals markiert.

Eine weitere Möglichkeit ist, daß ein UE beim Lesen des Informationselements 'Paging Cause', das wie zuvor beschrieben erfindungsgemäß ein zusätzliches Element "Terminating Multicast Session" enthält, einen Verweis PTMS entsprechend Figur 10 auf ein weiteres neues Informationselement "Terminating Multicast Session" (siehe Figur 11) erhält. In diesem Informationselement steht nun die Multicast Gruppe, für die die ankommende Nachricht bestimmt ist, dargestellt durch einem Multicast Gruppen Indikator GI (siehe Figur 9B und Figur 11). Die Änderungen gegenüber dem Stand der Technik sind markiert. Gegenüber der zuerst beschriebenen Möglichkeit, braucht hier das Informationselement ‚Paging Record' nicht verändert zu werden.

Zweckmäßig kann es ggf. auch sein, bereits in den Systeminformationssignalen (siehe Figur 5) des Funkkommunikationssystems, die von mindestens einem dessen Netzwerkelemente abgestrahlt wird, mindestens ein Indikatorsignal wie z.B. GSI (siehe Figur 58) darüber zusätzlich mitzuführen, auf welchem der Funkkanäle, insbesondere Secondary Common Control Physical Channels, mindestens ein Transportkanal (PCH) mit Informationen über die jeweilig zu übertragende Gruppennachricht übertragen wird.

Auf folgende Akronyme wird in der Beschreibung Bezug genommen, die hier zusammenfassend aufgelistet sind: (Grundsätzlich erfolgt dabei Mehrzahlbildung durch Anhängen eines 's', z.B.: ein RB, zwei RBs)

| | |
|---|---|
| BMC | Broadcast/Multicast Control |
| DCH | Dedicated Channel |
| DRX | Discontinuous Reception |
| FACH | Forward Access Channel |
| FDD | Frequency Devision Duplex |
| IMSI | International Mobil Subscriber Identitiy |

| | |
|---|---|
| IP | Internet Protocol |
| MAC | Medium Access Control |
| MC | Multicast |
| MS | Mobile Station |
| P-CCPCH | Primary Common Control Physical Channel |
| PCH | Paging Channel |
| PDCP | Packet Data Convergence Protocol |
| PI | Paging Indicator |
| PICH | Paging Indicator Channel |
| RB | Radio Bearer |
| RLC | Radio Link Control |
| RRC | Radio Ressource Control |
| S-CCPCH | Secondary Common Control Physical Channel |

| | |
|---|---|
| SFN | System Frame Number |
| SRB | Signalling Radio Bearer |
| UE | User Equipment |
| UMTS | Universal Mobile Telecommunication System |

| | |
|---|---|
| URA | UMTS Routing Area |

**Patentansprüche**

1. Verfahren zur Benachrichtigung mindestens einer Gruppe (MC1) von einem oder mehreren Teilnehmergeräten (UE11, UE21, UE31, UE42) eines Funkkommunikationssystems (FCS) über das Vorliegen mindestens einer Gruppennachricht (GN1), die an diese Gruppe (MC1) von mindestens einem Netzwerkelement (BS1, BS2) des Funkkommunikationssystems (FCS) über mindestens einen Funkkanal (PCS) versendet werden soll, wobei das Vorliegen dieser Gruppennachricht (GN1) dem Teilnehmergerät oder den Teilnehmergeräten (UE11, UE21, UE31, UE42) der jeweiligen Gruppe (MC1) mit Hilfe eines gemeinsamen, Gruppen-Paging-Indikatorsignals (GPI1) angezeigt und zur Auswertung bereitgestellt wird, wobei das gemeinsame Gruppen-PagingIndikatorsignal (GPI) über einen ersten separaten, physikalischen Funkkanal (PICH) von mindestens einem Netzwerkelement (BS1) an das Teilnehmergerät oder die Teilnehmergeräte (UE11, UE21, UE31, UE42) der jeweiligen Gruppe (MC1) übertragen wird,

**dadurch gekennzeichnet,**

**daß** über mindestens einen zweiten separaten Funkkanal (PCH) mindestens ein Informationssignal mit Paging-Informationen (PIV) zusätzlich darüber übertragen wird, welcher Art die zu übertragende Gruppennachricht (GN1) ist, welcher Paging-Grund für diese Gruppennachricht (GN1) vorliegt, und/oder an welche spezifische Empfängergruppe (MC1) von Teilnehmergeräten die jeweilige Gruppennachricht (GN1) adressiert ist, und

**daß** der erste separate Funkkanal (PICH) für das Gruppen-Paging-Indikatorsignal (GPI1) dem zweiten separaten Funkkanal (PCH) mit Informationen über die jeweilige Gruppennachricht (GN1) in eindeutiger Weise zugeordnet wird.

2. Verfahren nach Anspruch 1
   **dadurch gekennzeichnet,**
   **daß** vorab durch das jeweilige Netzwerkelement (BS1) den Teilnehmergeräten der jeweiligen Gruppe (MC1) durch mindestens ein Informationssignal mitgeteilt wird, auf welchem ersten Funkkanal (PICH) das Gruppen-Paging-Indikatorsignal (GPI) und/oder auf welchem zweiten Funkkanal (PCH) weitere Paging- Informationen (Paging Type, Paging Cause, GI) über die Art, dem Paging-Grund und/oder die spezifische Empfängergruppe der zu übertragenden Gruppennachricht (GN1) gesendet werden.

3. Verfahren nach einem der vorhergehenden Ansprüche,
   **dadurch gekennzeichnet,**
   **daß** in den Systeminformationssignalen des Funkkommunikationssystems (FCS), die von mindestens einem dessen Netzwerkelemente (BS1) abgestrahlt werden, mindestens ein Indikatorsignal (GSI) darüber mitgeführt wird, auf welchem der Funkkanäle, insbesondere Secondary Common Control Physical Channels, mindestens ein Transportkanal (PCH) mit Informationen über die jeweilig zu übertragende Gruppennachricht (GN1) übertragen wird.

4. Verfahren nach Anspruch 3,
   **dadurch gekennzeichnet, dass** die Systeminformationen um ein zusätzliches Informationselement (GPI) erweitert werden, durch das die Position eines Gruppen-Pagingindikator-Signals innerhalb des ersten Funkkanals (PCH) angegeben wird.

5. Verfahren nach einem der vorhergehenden Ansprüche ,
   **dadurch gekennzeichnet,**
   **dass** durch das zusätzliche Informationssignal mit Paging-Informationen (PIN) auf dem zweiten, separaten Funkkanal (PCH) als Paging-Grund "Terminating" angegeben wird.

6. Verfahren nach einem der vorhergehenden Ansprüche,
   **dadurch gekennzeichnet,**
   **daß** der zweite separate Funkkanal (PCH) als Bestandteil eines weiteren Funkkanals, insbesondere Secondary Common Control Physical Channels (S-CCPCH), übertragen wird.

7. Verfahren nach einem der vorhergehenden Ansprüche,
   **dadurch gekennzeichnet,**
   **daß** als Netzwerkelement zum Aussenden des Gruppen-Paging-Indikatorsignals (GPI1) und/oder der Gruppennachricht (GN1) eine Basisstation (BS1) verwendet wird.

8. Verfahren nach einem der vorhergehenden Ansprüche,
   **dadurch gekennzeichnet,**
   **daß** das Funkkommunikationssystem (FCS) nach dem UMTS (Universal Mobile Telecommunication System)-Standard betrieben wird.

**9.** Verfahren nach einem der vorhergehenden Ansprüche,
**dadurch gekennzeichnet,**
**daß** für die Übertragung des Gruppen-Paging-Indikatorsignals (GPI) und/oder weiterer Paging-Informationen (GI, Paging Cause, Paging Type) über die zu übertragende Gruppennachricht (GN1) jeweils ein spezifischer Funkkanal (PICH, S-CCPCH/PCH) im jeweiligen Teilnehmergerät (UE11) selbst und/oder von mindestens einem Netzwerkelement (BS1) in eindeutiger Weise vorbelegt oder berechnet wird.

**10.** Verfahren nach einem der vorhergehenden Ansprüche,
**dadurch gekennzeichnet,**
**daß** als Teilnehmergerät ein Mobilfunkgerät, insbesondere Mobilfunktelefon, verwendet wird.

**11.** Teilnehmergerät (UE11) eines Funkkommunikationssystems (FCS), das derart ausgebildet ist, daß es nach einem der vorhergehenden Verfahrensansprüche betreibbar ist.

**12.** Funkkommunikationssystem (FCS) zur Durchführung des Verfahrens nach einem der Ansprüche 1 mit 10

**Claims**

**1.** Method for notifying at least one group (MC1) of one or more subscriber devices (UE11, UE21, UE31, UE42) of a radio communication system (FCS) of the presence of at least one group message (GN1), which is to be sent to this group (MC1) by at least one network element (BS1, BS2) of the radio communication system (FCS) via at least one radio channel (PCS), whereby the presence of this group message (GN1) is indicated and supplied for evaluation to the subscriber devices (UE11, UE21, UE31, UE42) of the respective group (MC1) using a common, additional group paging indicator signal (GPI1), whereby the common group paging indicator signal (GPI) is transmitted via a first separate physical radio channel (PICH) of at least one network element (BS1) to the subscriber device or the subscriber devices (UE11, UE21, UE31, UE42) of the respective group (MC1).
**characterized in that**
at least one information signal with paging information (PIV) is also transmitted via at least one second, separate radio channel (PCH) about the nature of the group message (GN1) to be transmitted, the paging cause for this group message (GN1) and/or which specific recipient group (MC1) and that the first separate radio channel (PICH) for the group paging indicator signal (GPI1) is assigned in a unique manner to the second separate radio channel (PCH) with information about the respective group message (GN1).

**2.** Method according to Claim 1,
**characterized in that**
the respective network element (BS1) notifies the subscriber devices of the respective group (MC1) beforehand by means of at least one information signal about the first radio channel (PICH) on which the group paging indicator signal (GPI1) is sent and/or the second radio channel (PCH) on which further paging information (Paging Type, Paging Cause, GI) about the type, the paging reason and/or the specific receiver group of the group message (GN1) to be transmitted is sent.

**3.** Method according to one of the preceding claims,
**characterized in that**
in the system information signals of the radio communication system (FCS) which are emitted from at least one of its network elements at least one indicator signal (GS1) is maintained indicating on which of the radio channels, especially Secondary Common Control Physical Channels, at least one transport channel (PCH) with information is transmitted about the respective group signal (GN1) to be transmitted.

**4.** Method according to Claim 3,
**characterized in that**
the system information is expanded by an additional information element (GPI) by which the position of a group paging indicator within the first radio channel (PCH) is specified.

**5.** Method according to one of the preceding claims,
**characterized in that**
"Terminating" is specified as the paging reason by the additional information signal with paging information (PIN) on the second, separate radio channel (PCH)

**6.** Method according to one of the preceding claims,
**characterized in that**
the second, separate radio channel (PCH) is transmitted as a component of a further radio channel, specially a Secondary Common Control Physical Channel (S-CCPCH),

**7.** Method according to one of the preceding claims,
**characterized in that**
the network element is used to transmit the group paging indicator signal (GPI1) and/or the group message (GN1) of a base station (BS1).

**8.** Method according to one of the preceding claims,
**characterized in that**
the radio communication system (FCS) is operated according to the UMTS (Universal Mobile Telecommunication System) standard.

**9.** Method according to one of the preceding Claims,
**characterized in that**
one specific radio channel (PICH, S-CCPCH/PCH) is calculated uniquely in each instance in the respective subscriber device (UE11) itself and/or by at least one network element (BS1) for the transmission of the group paging indicator signal (GPI1) and/or further information (GI, Paging Cause) about the group message (GN1) to be transmitted.

**10.** Method according to one of the preceding Claims,
**characterized in that**
a mobile radio device, in particular a mobile radio telephone, is used as the subscriber device.

**11.** Subscriber device (UE11) of a radio communication system (FCS) that is configured so that it can be operated according to one of the preceding methods.

**12.** Radio communication system (FCS) for implementing the method according to one of Claims 1 through 10.


**Revendications**

**1.** Procédé pour alerter au moins un groupe (MC1) d'un ou de plusieurs appareils d'abonnés (UE11, UE21, UE31, UE42) d'un système de communication radio (FCS) de la présence d'au moins un message de groupe (GN1) qui doit être envoyé à ce groupe (MC1) par au moins un élément réseau (BS1, BS2) du système de communication radio (FCS) par l'intermédiaire d'au moins un canal radio (PCS), la présence de ce message de groupe (GN1) étant signalée à l'appareil d'abonné ou aux appareils d'abonnés (UE11, UE21, UE31, UE42) du groupe respectif (MC1) à l'aide d'un signal indicateur de pagination de groupe (GPI1) commun et étant mis à disposition pour évaluation, le signal indicateur commun de pagination de groupe (GPI1) étant transmis à l'appareil d'abonné ou aux appareils d'abonnés (UE11, UE21, UE31, UE42) du groupe respectif (MC1) par au moins un élément réseau (BS1) par l'intermédiaire d'un premier canal radio physique (PICH) séparé, **caractérisé en ce qu'**est additionnellement transmis, par l'intermédiaire d'au moins un deuxième canal radio séparé (PCH), au moins un signal d'information avec des informations de pagination (PIV) indiquant quelle est l'espèce du message de groupe (GN1) à transmettre, quelle est la cause de la pagination pour ce message de groupe (GN1) et/ou à quel groupe récepteur spécifique (MC1) d'appareils d'abonnés le message de groupe respectif (GN1) est adressé, et **en ce que** le premier canal radio séparé (PICH) pour le signal indicateur de pagination de groupe (GPI1) est affecté de manière univoque au deuxième canal radio séparé (PCH) avec des informations sur le message de groupe respectif (GN1).

**2.** Procédé selon la revendication 1, **caractérisé en ce qu'**il est préalablement communiqué aux appareils d'abonnés du groupe respectif (MC1), par l'élément réseau (BS1) respectif par au moins un signal d'information, sur quel premier canal radio (PICH) le signal indicateur de pagination de groupe (GPI) et/ou sur quel deuxième canal radio (PCH) sont émises d'autres informations de pagination (Paging Type, Paging Cause, GI) sur l'espèce, la cause de la pagination et/ou le groupe récepteur spécifique du message de groupe (GN1) à transmettre.

**3.** Procédé selon l'une des revendications précédentes, **caractérisé en ce que**, dans les signaux d'information système du système de communication radio (FCS) qui sont rayonnés par au moins l'un des éléments réseau (BS1) de ce dernier, au moins un signal indicateur (GSI) est transporté, indiquant sur lequel des canaux radio, en particulier des Secondary Common Control Physical Channels, au moins un canal de transport (PCH) est transmis avec des informations relatives au message de groupe (GN1) à transmettre respectivement.

4. Procédé selon la revendication 3, **caractérisé en ce que** les informations système sont élargies par un élément d'information (GPI) additionnel qui indique la position d'un signal indicateur de pagination de groupe à l'intérieur du premier canal radio (PCH).

5. Procédé selon l'une des revendications précédentes, **caractérisé en ce que** le signal d'information additionnel avec des informations de pagination (PIN) indique, sur le deuxième canal radio séparé (PCH), «Terminating» en tant que cause de la pagination.

6. Procédé selon l'une des revendications précédentes, **caractérisé en ce que** le deuxième canal radio séparé (PCH) est transmis en tant que composant d'un autre canal radio, en particulier du Secondary Common Control Physical Channels (S-CCPCH).

7. Procédé selon l'une des revendications précédentes, **caractérisé en ce qu'**une station de base (BS1) est utilisée en tant qu'élément réseau pour émettre le signal indicateur de pagination de groupe (GPI1) et/ou le message de groupe (GN1).

8. Procédé selon l'une des revendications précédentes, **caractérisé en ce que** le système de communication radio (FCS) est exploité selon le standard UMTS (Universal Mobile Telecommunication System).

9. Procédé selon l'une des revendications précédentes, **caractérisé en ce que**, pour la transmission du signal indicateur de pagination de groupe (GPI) et/ou d'autres informations de pagination (GI, Paging Cause, Paging Type) concernant le message de groupe (GN1) à transmettre, respectivement un canal radio spécifique (PICH, S-CCPCH/PCH) est pré-occupé ou calculé de manière univoque dans l'appareil d'abonné respectif (UE11) lui-même et/ou par au moins un élément réseau (BS1).

10. Procédé selon l'une des revendications précédentes, **caractérisé en ce qu'**est utilisé, en tant qu'appareil d'abonné, un appareil radio mobile, en particulier un téléphone radio mobile.

11. Appareil d'abonné (UE11) d'un système de communication radio (FCS) qui est configuré de manière telle qu'il peut être exploité selon l'une des revendications précédentes relatives au procédé.

12. Système de communication radio (FCS) permettant d'exécuter le procédé selon l'une des revendications 1 à 10.

EP 1 415 497 B1

## FIG 1

## FIG 2

# FIG 3

# FIG 4

# FIG 5A

Sekundär-CCPCH-Systeminformationen (Secondary CCPCH system information)

| Informationselement | Bedarf | Multi | Typ und Referenz | Semantikbeschreibung |
|---|---|---|---|---|
| Sekundär-CCPCH-System-informationen (Secondary CCPCH system information) | MP | (1 bis <max SCCPCH>) (1 to <max SCCPCH>) | | |
| Sekundär-CCPCH-Info (>Secondary CCPCH info) | MP | | Sekundär-CCPCH-Info 10.3.6.71 (Secondary CCPCH info 10.3.6.71 | |
| >TFCS | MD | | Transportformat-Kombinations-Satz 10.3.5.20 (Transport format-combination set 10.3.5.20 | Für FACHs und PCH ist der Vorgabe-wert der Wert von "TFCS" für den vor-herigen SCCPCH in der Liste (Anmerkung: erste Erscheinung ist dann MP). |
| >FACH/PCH-Informationen (>FACH/PCH information) | MD | 1 bis <max FACHPCH> 1 to <max FACHPCH> | | Vorgabewert ist der Wert von "FACH/PCH" für den vorherigen SCCPCH in der Liste (Anmerkung: erste Erscheinung ist dann MP). |
| >>Transportkanalidentität (>>Transport channel identity) | MP | | Transportkanal-identität 10.3.5.18 Transport channel identity 10.3.5.18 | |

EP 1 415 497 B1

# FIG 5B

Sekundär- CCPCH-Systeminformation (Secondary CCPCH system information)

| Informationselement | Bedarf | Multi | Typ und Referenz | Semantikbeschreibung |
|---|---|---|---|---|
| >>TFS | MP | | Transport-Format-Satz 10.3.5.23 (Transport format set 10.3.5.23) | Für jedes FACH und PCH Anmerkung 2. |
| >>CTCH-Anzeiger (>>CTCH indicator) | MP | | Boolsch (Boolean) | Der Wert "WAHR" zeigt an, daß ein CTCH auf den FACH abgebildet wird, und "FALSCH", daß kein CTCH abgebildet wird. |
| >PICH-Info (>PICH info) | OP | | PICH-Info 10.3.6.49 (PICH info 10.3.6.49) | PICH-Info liegt nur dann vor, wenn PCH auf Sekundär-CCPCH gemultiplext wird. |
| >Gruppen-Dienst-Anzeiger (>Group Service Indicator GSI) | OP | | Boolsch (Boolean) | Gruppen-Dienst-Anzeiger liegt nur dann vor, wenn PCH auf S-CCPCH gemultiplext wird. Zeigt an, welcher SCCPCH und welcher zugeordnete PICH zum überträgt von Gruppen-Dienst-Informationen verwendet werden. |

EP 1 415 497 B1

# FIG 6A

PICH-Info (Systeminformationen) (PICH Info (system information))

| Informationselement - Gruppenname | Bedarf | Multi | Typ und Referenz | Semantikbeschreibung |
|---|---|---|---|---|
| WAHL:Modus (CHOICE mode) | MP | | | |
| >FDD | | | | |
| >>Kanalisierungscode (>>Channelisation code) | MP | | Integer (0..255) | SF ist fest und gleich 256 |
| >>Anzahl von PI pro Rahmen (>>Number of PI per frame) | MP | | Integer (18, 36, 72, 144) | |
| >>STTD-Anzeiger (>>STTD indicator) | MP | | STTD-Anzeiger 10.3.6.78 (STTD Indicator 10.3.6.78) | |
| >>Gruppen-PI (>>Group PI) ⟍ GPI | OP | | Integer (0..Anzahl von PI pro Rahmen) (Integer (0..Number of PI per frame)) | Position von PI, die für Gruppen-Dienste im PICH-Rahmen bestimmt ist |
| >TDD | | | | |
| >>Kanalisierungscode (>>Channelisation code) | MD | | Aufgezählt ((16/1).. (16/16)) (Enumerated ((16/1)...(16/16)) | Vorgabewert ist der Kanalisierungscode, der von dem SCCPCH verwendet wird, der den zugeordneten PCH überträgt. |

EP 1 415 497 B1

# FIG 6B

PICH-Info (Systeminformationen) (PICH Info (system information))

| Informationselement - Gruppenname | Bedarf | Multi | Typ und Referenz | Semantikbeschreibung |
|---|---|---|---|---|
| >>Zeitschlitznummer (>>Timeslot number) | MD | | Zeitschlitznummer 10.3.6.84 (Timeslot number 10.3.6.84) | Vorgabewert ist der Zeitschlitz, der von dem SCCPCH verwendet wird, der den zugeordneten PCH überträgt. |
| >>Wahl:Burst-Typ (>>CHOICE Burst Type) | MP | | | |
| >>>Typ 1 (>>>Type 1) | | | | |
| >>>>Midambel-Verschiebung (>>>>Midamble Shift) | MP | | Integer (0..15) | |
| >>>Typ 2 (>>>Type 2) | | | | |
| >>>>Midambel-Verschiebung (>>>>Midamble Shift) | MP | | Integer (0..5) | |
| >>Wiederholungs-Periode/ Länge (>>Repetition period/length) | MD | | Aufgezählt ((4/2), (8/2), (8/4), (16/2), (16/4), (32/2), (32/4), (64/2), (64/4)) (Enumerated ((4/2), (8/2), (8/4), (16/2), (16/4), (32/2), (32/4), (64/2), (64/4))) | Vorgabewert ist "(64/2)". |

EP 1 415 497 B1

# FIG 6C

PICH-Info (Systeminformationen) (PICH Info (system information))

| Informationselement - Gruppenname | Bedarf | Multi | Typ und Referenz | Semantikbeschreibung |
|---|---|---|---|---|
| >>Versatz (>>Offset) | MP | | Integer (0...Wiederholungsperiode-1) (Integer(0...Repetition period-1)) | SFN mod Wiederholungsperiode =Versatz (SFN mod Repetitionperiod=Offset) |
| >>Paging-Anzeiger-Länge (>>Paging indicator length) | MD | | Integer (4, 8, 16) | Zeigt die Länge eines Paging-Anzeigers in Bit an. Vorgabewert ist 4. |
| >>$N_{GAP}$ | MD | | Integer (2, 4, 8) | Anzahl von Rahmen zwischen dem letzten Rahmen, der PICH für diesen Paging-Fall, überträgt und dem ersten Rahmen, der Paging-Nachrichten für diesen Paging-Fall überträgt. Vorgabewert ist 4. |
| >>$N_{PCH}$ | MD | | Integer (1..8) | Anzahl von Paging-Gruppen. Vorgabewert ist 2. |

EP 1 415 497 B1

# FIG 7

Paging-Typ 1 (PCH) ((Paging Type 1(PCH))

| Informationselement - Gruppenname | Bedarf | Multi | Typ und Referenz | Semantikbeschreibung |
|---|---|---|---|---|
| Nachrichten -Typ (Message Type) | MP | | Nachrichten Typ (Message Type) | |
| UE Informationselemente (UE Information elements) | | | | |
| Paging-Datensatzliste (Paging record list) | OP | 1 bis \<max-Page1> (1 to \<max-Page 1>) | | |
| >Paging-Datensatz (>Paging record) | MP | | Paging-Datensatz 10.3.3.23 (Paging record 10.3.3.23) | |
| Andere Informationselemente (Other information elements) | | | | |
| BCCH-Modifikations-Info (BCCH modification info) | OP | | BCCH-Modifikations-Info 10.3.8.1 (BCCH modification info 10.3.8.1) | |

EP 1 415 497 B1

# FIG 8

Paging - Grund (PCH) ((Paging cause (PCH))

| Informationselement - Gruppenname | Bedarf | Multi | Typ und Referenz | Semantikbeschreibung |
|---|---|---|---|---|
| Paging-Grund (Paging cause) | MP | | Aufgezählt (Gesprächsverbindung beenden, Streaming-Verbindung beenden, Interaktive Verbindung beenden, Hintergrund-Verbindung beenden, Signalgabe mit hoher Prorität beenden, Signalgabe mit niedriger Priorität beenden, <u>Multicast-Sitzung beenden,</u> Beenden, Grund unbekannt) (Enumerated (Terminating Conversational Call, Terminating Streaming Call, Terminating Interactive Call, Terminating Background Call, Terminating High Priority Signalling, Terminating Low Priority Signalling, <u>Terminating Multicast Session,</u> ⌐TMS Terminating - cause unknown)) | |

EP 1 415 497 B1

# FIG 9A

Paging-Datensatz (PCH) ((Paging record (PCH))

| Informationselement - Gruppenname | Bedarf | Multi | Typ und Referenz | Semantikbeschreibung |
|---|---|---|---|---|
| WAHL:Benutzte Paging-Identität (CHOICE Used paging identity) | MP | | | |
| >CN-Identität (>CN identity) | MP | | | |
| >>Paging-Grund (>>Paging cause) | MP | | Paging-Ursache 10.3.3.22 (Paging cause 10.3.3.22) | |
| >>CN-Domain-Identität (>>CN domain identity) | MP | | CN Domain Identität 10.3.1.1 (CN domain identity 10.3.1.1) | |
| >>WAHL UE-Identität (>>CHOICE UE Identity) | MP | | | |
| >>>IMSI (GSM-MAP) | | | IMSI (GSM-MAP) 10.3.1.5 | |
| >>>TMSI (GSM-MAP) | | | TMSI (GSM-MAP) 10.3.1.17 | |
| >>>P-TMSI (GMS-MAP) | | | P-TMSI (GSM-MAP) 10.3.1.13 | |
| >>>IMSI (DS-41) | | | TIA/EIA/IS-2000-4 | |
| >>>TMSI (DS-41) | | | TIA/EIA/IS-2000-4 | |
| >>UTRAN Identität (>>UTRAN identity) | | | | |

EP 1 415 497 B1

# FIG 9B

Paging-Datensatz (PCH) ((Paging record (PCH))

| Informationselement - Gruppenname | Bedarf | Multi | Typ und Referenz | Semantikbeschreibung |
|---|---|---|---|---|
| >>U-RNTI | MP | | U-RNTI 10.3.3.47 | |
| Page mit CN-Ursprung zu UE im verbundenen Modus (>>CN originated page to connected mode UE) | OP | | | |
| >>>Paging-Grund (>>>Paging cause) | MP | | Paging-Grund    10.3.3.22 (Paging cause 10.3.3.22) | |
| >>>CN-Domain-Identität (>>>CN domain identity) | MP | | CN-Domain-Identität 10.3.1.1 (CN domain identity 10.3.1.1) | |
| >>>Paging-Datensatz-Typ-Kennung (>>>Paging record type identifier) | MP | | Paging-Datensatz-Typ-Kennung 10.3.1.10 (Paging record type identifier 10.3.1.10) | |
| >>Gruppen-Identität (>>Group identity) ⟍GI | OP | | Multicast-Gruppen-Anzeiger (z.B. IMGI) (Multicast Group Indicator (e.g. IMGI)) | Anzeige der Multicast-Gruppe, für die ankommende Nachricht bestimmt ist |

# FIG 10

Paging-Grund (PCH) ((Paging cause (PCH))

| Informationselement - Gruppenname | Bedarf | Multi | Typ und Referenz | Semantikbeschreibung |
|---|---|---|---|---|
| Paging-Grund (Paging cause) | MP | | Aufgezählt (Gesprächsverbindung beenden, Streaming-Verbindung beenden, Interaktive Verbindung beenden, Hintergrund-Verbindung beenden, Signalgabe mit hoher Priorität beenden, Signalgabe mit niedriger Priorität beenden, <u>Multicast-Sitzung beenden,</u> Beenden, Ursache unbekannt) (Enumerated (Terminating Conversational Call, Terminating Streaming Call, Terminating Interactive Call, Terminating Background Call, Terminating High Priority Signalling, Terminating Low Priority Signalling, <u>Terminating Multicast Session,</u> Terminating - cause unknown)) | PTMS |

EP 1 415 497 B1

# FIG 11

Multicast-Sitzung beenden (Terminating Multicast Session)

| Informationselement - Gruppenname | Bedarf | Multi | Typ und Referenz | Semantikbeschreibung |
|---|---|---|---|---|
| Multicast- Gruppen-Anzeiger (Multicast Group Indicator)<br>GI | OP | | Multicast-Gruppen-Anzeiger (z.B. IMGI) (Multicast Group Indicator (e.g. IMGI)) | Anzeige der Multicast-Gruppe, für die ankommende Nachricht bestimmt ist |

EP 1 415 497 B1